**Europäisches Patentamt**

**European Patent Office**

**Office européen des brevets**

(19)

(11) Veröffentlichungsnummer : **0 423 273 B1**

(12) # EUROPÄISCHE PATENTSCHRIFT

(45) Veröffentlichungstag der Patentschrift :
23.06.93 Patentblatt 93/25

(51) Int. Cl.⁵ : **G01L 1/16, G01L 9/08**

(21) Anmeldenummer : **90906044.4**

(22) Anmeldetag : **18.04.90**

(86) Internationale Anmeldenummer :
**PCT/AT90/00033**

(87) Internationale Veröffentlichungsnummer :
**WO 90/13010 01.11.90 Gazette 90/25**

(54) **VERFAHREN UND ANORDNUNG ZUR PIEZOELEKTRISCHEN MESSUNG.**

(30) Priorität : **27.04.89 AT 1015/89**

(43) Veröffentlichungstag der Anmeldung :
**24.04.91 Patentblatt 91/17**

(45) Bekanntmachung des Hinweises auf die
Patenterteilung :
**23.06.93 Patentblatt 93/25**

(84) Benannte Vertragsstaaten :
**CH DE DK FR GB IT LI SE**

(56) Entgegenhaltungen :
**US-A- 3 521 166**
**US-A- 4 546 658**
**US-A- 4 807 482**
**Patent Abstracts of Japan, vol. 10, No. 76,**
**(P-440)(2133), 26 March 1986; & JP-A-60 214**
**232**

(73) Patentinhaber : **AVL Gesellschaft für**
**Verbrennungskraftmaschinen und**
**Messtechnik mbH.Prof.Dr.Dr.h.c. Hans List**
**Kleiststrasse 48**
**A-8020 Graz (AT)**

(72) Erfinder : **HARMS, Klaus-Christoph**
**Attemsgasse 11**
**A-8010 Graz (AT)**
Erfinder : **KREMPL, Peter, W.**
**A-8047 Kainbach 211**
**A-8047 Kainbach 211 (AT)**
Erfinder : **MOIK, Josef**
**Rauchleitenstrasse 63**
**A-8010 Graz (AT)**

(74) Vertreter : **Pinter, Rudolf, Dipl.-Ing.**
**Patentanwälte Klein & Pinter OEG**
**Fasangasse 49**
**A-1030 Wien (AT)**

EP 0 423 273 B1

Jouve, 18, rue Saint-Denis, 75001 PARIS

## Beschreibung

Technisches Gebiet

Die Erfindung betrifft ein Meßverfahren zur Bestimmung bzw. Überwachung von mechanischen und/oder physikalischen Größen, wobei ein zumindest ein piezoelektrisches Wandlerelement enthaltender Sensor der zu bestimmenden bzw. überwachenden Größe ausgesetzt und ein von dieser Größe beeinflußtes elektrisches Sensorsignal auf einer einzigen Signalleitung als Meßsignal ausgewertet wird. Weiters betrifft die Erfindung auch eine Meßanordnung, mit einem zumindest ein piezoelektrisches Wandlerelement enthaltenden Sensor und einem damit über eine einzige Signalleitung samt elektrischer Rückführung in Verbindung stehenden Meßverstärker, sowie vorteilhafte Verwendungen einer derartigen, erfindungsgemäß ausgestatteten Meßanordnung.

Stand der Technik

Verfahren und Anordnungen der genannten Art sind in vielfältigstem Zusammenhang bekannt und in steigendem Ausmaß in Verwendung. So ist aus der AT-PS 276.810 ein piezoelektrischer Sensor bekannt, der beispielsweise zur Überwachung des Verbrennungsvorganges im Brennraum einer Brennkraftmaschine einsetzbar ist. Zu diesem Zwecke wird der Sensor abdichtend in eine Indizierbohrung der Brennraumwand eingesetzt und ein geeigneter Meßverstärker an den Signalausgang des Meßwertaufnehmers angeschlossen, der die bei Druckschwankungen im Brennrauminneren über den direkten Piezoeffekt vom piezoelektrischen Wandlerelement erzeugten Meßsignale auswertet. Der Nachteil dieser bekannten Anordnung bzw. des zugehörigen Meßverfahrens besteht darin, daß aufgrund der immer vorhandenen Widerstände und Leckströme die piezoelektrischen Wandlerelemente relativ starke Nullpunktverschiebungen aufweisen können, sodaß Messungen praktisch nur von dynamischen Druckänderungen - bzw. von Änderungen von zu messenden Größen mit einer bestimmten Frequenz - sinnvoll durchführbar sind und daß entsprechend keine absoluten oder statischen Messungen ausgeführt werden können. Weiters besteht auch keine Möglichkeit den Sensor in der Meßkette hinsichtlich seiner korrekten Funktion zu überprüfen bzw. zu justieren, sodaß immer gewisse Unsicherheiten im Hinblick auf das Meßergebnis bestehen.

Weiters sind auch piezoelektrische Sensoren bekannt, welche aufgrund der Art und Anordnung ihrer Wandlerelemente bzw. der Durchführung des Meßverfahrens und der Art der Auswertung der Meßsignale zu statischen bzw. quasistatischen Messungen geeignet sind. So ist beispielsweise aus der AT-PS 353.506 ein piezoelektrischer Sensor bekannt, mit welchem über die Änderung des Schwingverhaltens eines im Sensor angeordneten piezoelektrischen Resonators verschiedene Größen, wie z.B. Temperatur oder Druck, bestimmt bzw. überwacht werden können. Derartige Sensoren haben eine sehr hohe Auflösung, besitzen aber wegen der dafür notwendigen hohen Zählraten üblicherweise nur eine sehr geringe Dynamik. Zusätzlich bleibt auch bei diesen Anordnungen bzw. Verfahren der Nachteil bestehen, daß der Sensor in der Meßkette nicht hinsichtlich seiner Funktion überwacht oder justiert werden kann.

Schließlich ist beispielsweise aus der AT-PS 369.900 auch ein piezoelektrischer Sensor bekannt, der Wandlerelemente der oben genannten Art sowohl für statische als auch für dynamische Messungen kombiniert enthält, womit hohe Auflösung und Dynamik einerseits und eine Verwendbarkeit für statische bzw. quasistatische Messungen andererseits erreicht ist. Nachteile ergeben sich dabei insofern, als der Sensor selbst durch die beiden Wandlerelemente samt unabhängigen Anspeisungen bzw. Signalleitungen relativ kompliziert aufgebaut sein muß und damit für viele Anwendungszwecke ausscheidet. Weiters müssen auch für die beiden separat ablaufenden Meßverfahren die jeweils erforderlichen Meßverstärker bereitgestellt, angeschlossen, usw., werden, was den Meßaufwand insgesamt erhöht und weitere Fehlermöglichkeiten bringt.

Aus der US-A-4 807 482 ist ein piezoelektrischer Sensor mit einer einzigen Signalleitung für ein einziger resultieren des Signal bekannt.

Darstellung der Erfindung

Aufgabe der vorliegenden Erfindung ist es, Meßverfahren und Anordnungen der genannten Art so zu verbessern, daß die angeführten Nachteile der bekannten Verfahren und Anordnungen vermieden werden und daß insbesonders auf konstruktiv und messtechnisch einfache Weise mechanische und/oder physikalische Größen verschiedenster Art und Änderungsfrequenz mit einem einfach aufgebauten Sensor bestimmt bzw. überwacht werden können.

Dies wird gemäß der vorliegenden Erfindung bei einem Meßverfahren der eingangs genannten Art dadurch erreicht, daß der Sensor über die gemeinsame, einzige Signalleitung samt elektrischer Rückführung in beiden möglichen Betriebsarten - einerseits bei niedrigen Frequenzen als Meßelement für eine mechanische Größe unter Ausnutzung des direkten Piezoeffektes und andererseits bei höheren Frequenzen als piezoelektrischer Resonator unter Ausnutzung des inversen Piezoeffektes zur elektrischen Anregung mechanischer Schwingungen und des direkten Piezoeffektes zur Erzeugung der piezoelektrischen Rückwirkung - betrieben wird und daß aus dem Meßsignal auf der Signalleitung ein höherfrequentes, die Resonanzcharakteristik beschreibendes Signal und ein niederfrequenteres, die mechanische Einwirkung beschreibendes, vorzugsweise ladungsproportionales Signal erzeugt wird. Damit ist im einfachsten Falle am piezoelektrischen Sensor selbst überhaupt keine konstruktive Änderung erforderlich. Es wird mit dieser Verfahrensausgestaltung die Tatsache ausgenützt, daß die Frequenz des Anregungssignals eines als piezoelektrischer Resonator betriebenen Wandlerelements über - und zumeist weit über - den auftretenden Änderungsfrequenzen von zu bestimmenden bzw. zu überwachenden mechanischen und/oder physikalischen Größen liegt, sodaß die entsprechenden charakteristischen Frequenzen im Meßsignal trennbar und getrennt zur Ermittlung der beiden relevanten Signale auswertbar sind.

Es kann damit beispielsweise ein Meßverstärker gebaut werden, der einen Frequenzausgang hat, wo die jeweilige Resonanzfrequenz des angeschlossenen piezoelektrischen Wandlerelementes ablesbar ist. Über die Auswertung dieser Resonanzfrequenz kann man beispielsweise - soferne sie eine dezidierte Druckabhängigkeit hat - den Druck ablesen, was einer statischen bzw. quasistatischen Druckmessung entspricht. Sofern diese Resonanzfrequenz eine eindeutige Temperaturabhängigkeit hat, kann auf diese Weise unmittelbar die Temperatur der Wandlerelemente gemessen oder überwacht werden. Auch möglich ist es, diese Resonanzfrequenz einfach als für das Funktionieren des Wandlerelements signifikant zu betrachten, womit festgestellt werden kann, ob die jeweilige Meßkette noch einwandfrei funktioniert. Es ist dabei tatsächlich eine Aussage über die komplette Meßkette zu erhalten, da ja beispielsweise das Funktionieren des Ladungsverstärkers auch notwendig für das Funktioneren des Resonators ist - das heißt auch wenn der Meßverstärker oder ein Kabel defekt ist, ist dies an der wie oben beschrieben ermittelten Verschiebung der Resonanzfrequenz ablesbar.

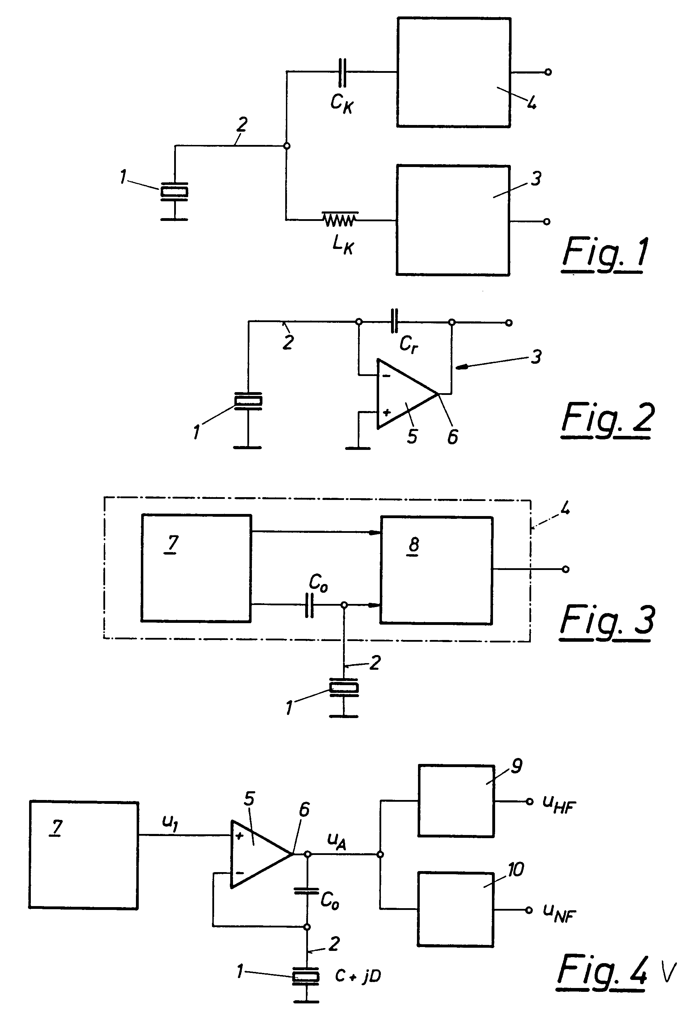

Für den meßtechnisch einfachsten Fall, wenn nämlich die beiden angesprochenen Frequenzbereiche genügend weit auseinanderliegen, reicht für die Durchführung des Meßverfahrens eine Entkoppelung der beiden relevanten Signale im Meßsignal mit einer Induktivität und einer Kapazität (siehe auch Fig. 1 und zugehörige Beschreibung). Da jedoch beispielsweise bei Quarzdruckaufnehmern der untere Frequenzbereich der ersten Betriebsart bis nahe an den Frequenzbereich der zweiten Betriebsart heranreicht, genügt üblicherweise diese einfache L-C-Entkoppelung nicht. Die erfindungsgemäße Ausgestaltung der Meßanordnung sieht dementsprechend vor, daß der Sensor für den Betrieb in den beiden möglichen Betriebsarteneinerseits bei niedrigen Frequenzen als Meßelement für eine mechanische Größe unter Ausnutzung des direkten Piezoeffektes und andererseits bei höheren Frequenzen als piezoelektrischer Resonator unter Ausnutzung des inversen Piezoeffektes zur elektrischen Anregung mechanischer Schwingungen und des direkten Piezoeffektes zur Erzeugung der piezoelektrischen Rückwirkung - über eine gemeinsame, einzige Signalleitung mit dem invertierenden Eingang eines im Meßverstärker angeordneten Ladungsverstärkers in Verbindung steht, daß der Ladungsverstärker weiters mit dem Ausgang eines Signalgenerators in Verbindung steht und von diesem mit einem Frequenzsignal angesteuert ist, dessen Mittelwert gleich dem Potential der elektrischen Rückführung ist, und daß der über einen Kondensator auf den invertierenden Eingang rückgekoppelte Ausgang eines im Ladungsverstärker angeordneten Operationsverstärkers einerseits mit dem Eingang eines Hochpaßfilters, an dessen Ausgang ein von der Resonanzcharakteristik abhängiges Signal $u_{HF}$ abgreifbar ist, und andererseits mit dem Eingang eines Tiefpaßfilters, an dessen Ausgang ein niederfrequenteres Ladungsverstärkersignal $u_{NF}$ abgreifbar ist, in Verbindung steht. Damit wirkt der Ladungsverstärker als Teil des zur Auswertung der Rückwirkung der Schwingungsanregung dienenden Resonanzdetektors. Die Rückkopplungskapazität des Ladungsverstärkers bildet zusammen mit dem angeschlossenen piezoelektrischen Wandlerelement einen Spannungsteiler, der sowohl zur Schwingungsanregung als auch zur Detektion der piezoelektrischen Rückwirkung dient.

Hier, wie auch im folgenden, kann naturgemäß anstelle von Hochpaß- und/oder Tiefpaßfilter auch jeweils ein geeignete untere bzw. obere Grenzfrequenz aufweisender Bandpaß Verwendung finden.

In weiterer Ausgestaltung des Meßverfahrens ist demgemäß vorgesehen, daß über die Signalleitung ein höherfrequentes Anregungssignal zur Anregung des Sensors zu mechanischen Schwingungen geliefert wird, dem ein in der Folge durch die piezoelektrische Rückwirkung des Sensors erzeugtes Signal gleicher Frequenz und ein vom Sensor aufgrund mechanischer, niederfrequenterer Einwirkungen generiertes niederfrequentes Signal überlagert werden, wobei der niederfrequente Anteil des Meßsignal auf der Signalleitung virtuell kurzgeschlossen und der dabei auftretende Kurzschlußstrom zur weiteren Signalverarbeitung verstärkt und vorzugsweise zu einem ladungsproportionalen Ausgangssignal integriert wird.

Zur eigentlichen Signalverarbeitung kann im obigen Zusammenhang gemäß zwei alternativen Vorschlägen der Erfindung entweder der höherfrequente Anteil des Meßsignals auf der Signalleitung kapazitiv vom nieder-

EP 0 423 273 B1

frequenten Anteil entkoppelt werden, oder aber vorgesehen sein, daß das höherfrequente Anregungssignal auf der Signalleitung spannungsmäßig eingeprägt wird und der gesamte Strom durch den Sensor, höherfrequente und niederfrequente Anteile, zur weiteren Signalverarbeitung herangezogen wird. Beides sind einfache und wirkungsvolle Möglichkeiten zur Durchführung bzw. Verbesserung des erfindungsgemäßen Meßverfahrens, die eine saubere Trennung der relevanten Signale aus dem Meßsignal auch bei nahe zusammenliegenden Frequenzbereichen für die beiden Betriebsarten sicherstellen.

Für die erstgenannte Alternative ist die erfindungsgemäße Meßanordnung so ausgestaltet, daß der Frequenzsignal-Ausgang des Signalgenerators mit dem nichtinvertierenden Eingang des Ladungsverstärkers verbunden ist. Für die zweite Alternative ist erfindungsgemäß vorgesehen, daß der Frequenzsignal-Ausgang des Signalgenerators über einen Emitterfolger mit der Signalleitung des Sensors verbunden ist, daß in der Emitter- und in der Kollektorleitung des Emitterfolger-Transistors jeweils eine Konstantstromquelle eingeschaltet ist und daß der Kollektor des Emitterfolger-Transistors mit dem invertierenden Eingang des Ladungsverstärkers verbunden ist, wobei beispielsweise auch der nicht invertierende Eingang auf einem Ruhepotential, vorzugsweise auf Potential der elektrischen Rückführung, liegen kann, sodaß das Kollektorpotential des Emitterfolger-Transistors auf einen für den Betrieb des Transistors geeigneten Wert eingestellt wird.

In weiterer Ausgestaltung des erfindungsgemäßen Meßverfahrens ist vorgesehen, daß zur Bildung des höherfrequenten Signals die Differenz zwischen einem in Frequenz und Phase dem Anregungssignal entsprechenden, vom Sensor unbeeinflußten Referenzsignal und dem Meßsignal gebildet wird, wobei das Anregungssignal und das Referenzsignal in ihren Amplituden relativ zueinander abstimmbar sind. Dabei kann weiters die Amplitudenabstimmung so vorgenommen werden, daß der Realteil des höherfrequenten Signals verschwindet. Durch diese Verbesserungen des grundsätzlichen Meßverfahrens nach der vorliegenden Erfindung kann ein deutlicheres für die Resonanzen des Wandlerelementes charakteristisches Ausgangssignal gewonnen werden. Wenn der Realteil des höherfrequenten Signals durch die Amplitudenabstimmung zum Verschwinden gebracht wird, so erhält man die gewünschte Größe, die proportional zum dissipativen Teil der komplexwertigen Wandlerkapazität ist. Gleichzeitig kann man wie zuvor das nachverstärkte Signal des eigentlichen Ladungsverstärkers messen, welches proportional zur einwirkenden mechanischen Größe ist.

Zur Bereitstellung des zur Schwingungsanregung dienenden Frequenzsignals kann in weiterer Ausgestaltung des erfindungsgemäßen Meßverfahrens das bandpaßgefilterte höherfrequente Signal phasenrichtig aktiv rückgekoppelt werden, vorzugsweise unter automatischer Abstimmung der Schleifenverstärkung auf den Faktor 1. Damit wird mittels der Resonanz-Messung selbst ein Oszillator verwirklicht, sodaß ein separater Signalgenerator oder dergleichen für die Anregung des Wandlerelements überflüssig ist.

Zur Realisierung des oben beschriebenen "Referenz-Differenz"-Verfahrens ist in Ausgestaltung der erfindungsgemäßen Meßanordnung vorgesehen, daß der Signalgenerator einen weiteren Frequenzsignal-Ausgang aufweist, der - bezogen auf das am nichtinvertierenden Eingang des Ladungsverstärkers liegende Signal $u_1$ - ein in der Frequenz und Phase gleiches und in der Amplitude abstimmbares Referenzsignal $u_2$ führt und mit dem nichtinvertierenden Eingang eines Referenzladungsverstärkers verbunden ist, daß der invertierende Eingang eines im Referenzladungsverstärker angeordneten Operationsverstärkers über eine Kapazität mit dem Potential der Rückführung verbunden und über eine weitere Kapazität mit seinem Ausgang rückgekoppelt ist, daß der über ein weiteres Hochpaßfilter geführte Ausgang des Referenzladungsverstärkers ebenso wie der Ausgang des das Signal $u_{HF}$ führenden Hochpaßfilters mit einem Differenzverstärker verbunden ist, an dessen Ausgang ein die Resonanzcharakteristik beschreibendes Signal $u_D$ abgreifbar ist. Die in diesem Zusammenhang vorgenommene Subtraktion zwischen den beiden Signalen $u_1$ und $u_2$ kann nicht nur - wie mit vorausgesetzt gleichphasigen Signalen $u_1$ und $u_2$ - mit einem Differenzverstärker durchgeführt werden, sondern natürlich auch - bei gegenphasigen Signalen $u_1$ und $u_2$ - mit einem Addierverstärker. Auch könnte weiters die Reihenfolge von Filterung und Subtraktion natürlich bedarfsweise vertauscht sein. Im Prinzip wird durch diese Ausgestaltung der Meßanordnung eine der hauptsächlichen Wirkungen des piezoelektrischen Wandlers, nämlich sich wie eine Kapazität zu verhalten, aus dem Meßsignal heraussubtrahiert, sodaß das durch die große Grundkapazität etwas verdeckte Schwingverhalten deutlicher hervorkommt.

Im letztgenannten Zusammenhang kann weiters noch vorgesehen sein, daß der das Signal $u_{NF}$ führende Ausgang des Tiefpaßfilters mit dem Eingang eines Nachverstärkers verbunden ist, an dessen Ausgang ein aufbereitetes Signal $u_Q$ zur Verfügung steht, welches eine klarere Aussage auch hinsichtlich der niederfrequenteren Teile des Meßsignals ermöglicht.

Gemäß einer besonders bevorzugten weiteren Ausgestaltung dieser Meßanordnung ist vorgesehen, daß der hochpaßgefilterte Ausgang des Differenzverstärkers mit einem Synchrondemodulator in Verbindung steht, der weiters mit einer Einheit zur Erzeugung einer Phasenreferenz verbunden ist, welche ihrerseits mit dem Signalgenerator verbunden ist, vorzugsweise mit einem der Frequenzsignalausgänge davon, und daß der Ausgang des Synchrondemodulators mit dem Istwert-Eingang eines Reglers verbunden ist, der weiters einen Sollwerteingang und einen Stellgrößenausgang aufweist, welch letzterer mit einer Abstimmeinheit zur Abstimmung

4

der relativen Amplituden der beiden Ausgangssignale $u_1$, $u_2$ des Signalgenerators aufeinander verbunden ist. Damit ist die Meßanordnung im Prinzip um einen Regler zur automatischen Abstimmung der relativen Amplituden der beiden Ausgangssignale $u_1$, $u_2$ erweitert. Im Synchrondemodulator wird mit Hilfe der z.B. aus einem der Signale $u_1$ oder $u_2$ abgeleiteten Phasenreferenz der Realteil von $u_D$ gewonnen und in der geschlossenen Regelschleife auf Null abgestimmt.

In weiterer Ausgestaltung der genannten Meßanordnung kann vorgesehen sein, daß der hochpaßgefilterte Ausgang des Differenzverstärkers mit einem weiteren Synchrondemodulator verbunden ist, daß der weitere Synchrondemodulator mit einer Phasenreferenzeinheit verbunden ist, welche ihrerseits mit dem Frequenzsignalausgang des als VCO ausgebildeten Signalgenerators in Verbindung steht, daß der Ausgang des Synchrondemodulators mit dem Eingang eines Maximumreglers verbunden ist, welcher zur Abstimmung des VCO, der vorzugsweise unabhängig davon auch grobabstimmbar ist, mit diesem in Verbindung steht. Damit ist die eigentliche Resonanz-Meßschaltung zu einem Oszillator erweitert. Mit Hilfe des Maximumreglers wird der VCO (Voltage Controled Oscillator) auf die Frequenz maximaler Verlustleistung, also auf die Resonanzfrequenz(en) des Wandlerelementes, eingestellt. Im zweiten Synchrondemodulator wird mit Hilfe der Phasenreferenz der Imaginärteil von $u_D$ gewonnen und als Istwert dem Maximumregler zugeführt.

Eine Variante zur letztgenannten Ausgestaltung der Meßanordnung ist in weiterer Ausbildung der Erfindung dadurch gekennzeichnet, daß der Signalgenerator als VCO ausgebildet ist, dessen Frequenzsignalausgang auch mit dem nichtinvertierenden Eingang eines in einem Referenzladungsverstärker angeordneten Operationsverstärkers verbunden ist, dessen invertierender Eingang über eine einstellbare Kapazität auf dem Potential der Rückführung hegt und über eine weitere Kapazität mit seinem Ausgang rückgekoppelt ist, daß der Ausgang des Referenzladungsverstärkers ebenso wie der Ausgang des Ladungsverstärkers selbst mit einem Differenzverstärker verbunden ist, daß der hochpaßgefilterte Ausgang des Differenzverstärkers mit einem Synchrondemodulator verbunden ist, dem das Ausgangssignal einer ebenfalls mit dem Frequenzsignalausgang des VCO verbundenen Phasenreferenzeinheit zugeführt ist und der mit seinem Ausgang mit dem Istwert-Eingang eines Reglers verbunden ist, und daß der weiters auch einen Sollwerteingang aufweisende Regler einen Stellgrößenausgang aufweist, der mit einem Frequenzregeleingang des VCO verbunden ist. Damit ist der Meßverstärker zum Betrieb als Ladungsverstärker einerseits und als Oszillator für eine Frequenz andererseits ausgebildet. Es ist auf den obenstehend angesprochenen Regler zur automatischen Abstimmung der relativen Amplituden der beiden Ausgangssignale des Signalgenerators verzichtet und statt dessen vorgesehen, die erforderliche Abstimmung bei der Inbetriebnahme der Schaltung vorzunehmen und während des Betriebes nicht nachzustimmen. Somit kann das Abstimmkriterium, daß der Realteil von $u_D$ gleich Null sein soll, zur Erzeugung jener Frequenz verwendet werden, für die diese Bedingung erfüllt ist. Die Vorabstimmung kann von Hand aus oder rechnergesteuert aufgrund einer vorausgehenden Analyse der mit Hilfe des Resonanzdetektors gewonnenen Resonanzcharakteristik des Wandlerelementes erfolgen, sodaß die Frequenz eine Resonanzfrequenz des piezoelektrischen Wandlerelementes ist. Als abzustimmende Bauteile kommen eine oder mehrere der genannten Kapazitäten sowie unter Umständen auch eine separate abstimmbare Kapazität parallel zum piezoelektrischen Wandlerelement in Frage.

Entsprechend einer erfindungsgemäßen Alternative zur oben an letzter Stelle besprochenen Meßanordnung ist vorgesehen, daß der Signalgenerator mittels einer aktiven Rückkopplung des am Ausgang des als Bandpaß ausgeführten Hochpaßfilters zur Verfügung stehenden Signals $u_{HF}$ an den nichtinvertierenden Eingang des Ladungsverstärkers sowie den nichtinvertierenden Eingang eines Referenzladungsverstärkers realisiert ist, daß der Ausgang des Referenzladungsverstärkers ebenso wie der Ausgang des Ladungsverstärkers mit einem Differenzverstärker verbunden ist, dessen Ausgang dem Bandpaß und dem Tiefpaßfilter zugeführt ist, und daß in der aktiven Rückkopplung ein 90°-phasendrehendes Glied und vorzugsweise eine automatische Verstärkungskontrolleinheit (AGC) eingeschaltet sind. Auf diese Weise ist der Meßverstärker als Ladungsverstärker und als Oszillator mit direkter Rückkoppelung, ohne zwischengeschalteten VCO ausgebildet. Der z.B. anfänglich von Hand aus mit Hilfe einer Kapazität abgestimmte Resonanzdetektor liefert im Resonanzfall des piezoelektrischen Wandlerelements ein maximales Ausgangssignal, dessen Phase um 90° gegenüber dem anregenden Signal verdreht ist. Um der Rückkopplungsbedingung für ungedämpfte Schwingungen zu genügen, muß das Ausgangssignal zusätzlich um 90° Phase gedreht werden. Über die AGC-Einheit wird die Schleifenverstärkung auf den Wert 1 geregelt. Das Bandpaßfilter dient zur Selektion einer Resonanz innerhalb eines bestimmten Frequenzbandes. Über das Tiefpaßfilter kann wie auch bei den anderen Ausführungsformen das niederfrequente Signal des Ladungsverstärkers abgegriffen werden.

Bei Verwendung der erfindungsgemäßen Meßanordnung beispielsweise im Zusammenhang mit einem in einem Flugzeug fest eingebauten Accelerometer, ist es möglich, beispielsweise von einer Kontrollstation aus eine Fernabfrage durchzuführen, um festzustellen, ob die gesamte Meßkette noch in Ordnung ist, also ob man sich auf die die jeweilige Belastung anzeigenden Meßwerte auch tatsächlich verlassen kann. In diesem Zusammenhang ist auch die vorteilhafte erfindungsgemäße Verwendung einer Meßanordnung der beschriebe-

EP 0 423 273 B1

nen Art zur Bestimmung bzw. Überwachung von mechanischen und/oder physikalischen Größen über die niederfrequenteren Teile des Meßsignals auf der Signalleitung unter gleichzeitiger Überwachung der Funktion des Sensors über das durch die höherfrequenten Teile des Meßsignals charakterisierte Resonanzverhalten, wobei der Sensor ein einzelnes Wandlerelement aufweist, welches zumindest ein Piezoelement enthält, zu sehen.

Ebenso möglich ist aber nach einem weiteren Vorschlag der Erfindung die Verwendung einer Meßanordnung der hier beschriebenen Art zur gleichzeitigen Bestimmung bzw. Überwachung von zumindest zwei unterschiedlichen mechanischen und/oder physikalischen Größen, wobei der Sensor zumindest zwei separate auf die jeweilige Aufgabe optimierte Wandlerelemente aufweist. Diese beiden Wandlerelemente können elektrisch und/oder mechanisch entweder parallel oder in Serie geschaltet sein, wobei sich die jeweilige optimale Anordnung aus der Meßaufgabe ergibt. Es bleibt gegenüber dem Stand der Technik der Vorteil, daß es nach wie vor nur eine einzige Signalleitung gibt und daß die gesamte Meßanordnung auch für die Auswertung der beiden relevanten Signale aus dem Meßsignal gemeinsam und kompakt bleibt.

In weiterer Ausgestaltung der erfindungsgemäßen Meßanordnung ist vorgesehen, daß der Frequenzsignalausgang des Signalgenerators am nichtinvertierenden Eingang eines Operationsverstärkers hegt, dessen Ausgang mit dem Gate eines FET verbunden ist, der seinerseits über Source auf den invertierenden Eingang des Operationsverstärkers rückgekoppelt und mit einer Konstantstromquelle sowie mit der Signalleitung des Sensors verbunden ist, daß der invertierende Eingang des Ladungsverstärkers mit Drain des FET und mit einer weiteren Konstantstromquelle verbunden ist, wobei auch vorgesehen sein kann, daß der nicht invertierende Eingang des Ladungsverstärkers auf einem Ruhepotential, bzw. Potential der elektrischen Rückführung liegt. Damit ergibt sich in Analogie zu der oben beschriebenen Meßanordnung mit dem Emitterfolger zwischen Signalgenerator und Signalleitung des Sensors eine mit FET gesteuerte Anordnung, die insbesonders in einer erfindungsgemäßen Erweiterung vorteilhaft ist, gemäß welcher vorgesehen ist, daß der Signalgenerator einen weiteren Frequenzsignalausgang aufweist, der am nichtinvertierenden Eingang eines Referenz-Operationsverstärkers liegt, dessen Ausgang mit dem Gate eines weiteren FET verbunden ist, der seinerseits über Source auf den invertierenden Eingang des Referenz-Operationsverstärkers rückgekoppelt und mit einer Konstantstromquelle sowie mit einem andererseits auf Potential der Rückführung liegenden Kondensator verbunden ist, daß der invertierende Eingang eines Referenz-Ladungsverstärkers mit Drain des weiteren FET und mit einer weiteren Konstantstromquelle verbunden ist, und daß weiters die Ausgänge von Ladungsverstärker einerseits und Referenz-Ladungsverstärker andererseits einem Differenzspannungsverstärker zugeführt sind, dessen Ausgang am Eingang des Hochpaß- sowie des Tiefpaßfilters liegt. Damit ist entsprechend der Erweiterung des ursprünglich besprochenen Grundprinzips der erfindungsgemäßen Meßanordnung zu einem über einen Referenzteil realisierten Resonanzdetektor eine Anordnung geschaffen, deren Empfindlichkeit für die Resonanzcharakteristik durch subtraktive Kompensation der Parallelkapazität des Wandlerelements wesentlich gesteigert wird. Wenn die Abstimmung der beiden Zweige so vorgenommen wird, daß der Realteil des Signals durch die Subtraktion verschwindet, so erhält man die gewünschte Größe, die proportional zum dissipativen Teil der komplexwertigen Wandlerkapazität ist.

In weiterer Ausbildung der Erfindung kann unter Abwandlung der zuletzt beschriebenen Meßanordnung auch vorgesehen sein, daß der Frequenzsignalausgang des Signalgenerators am nichtinvertierenden Eingang eines Operationsverstärkers liegt, dessen Ausgang mit dem Gate eines FET verbunden ist, der seinerseits über Source auf den invertierenden Eingang des Operationsverstärkers rückgekoppelt und mit einer Konstantstromquelle sowie mit der Signalleitung des Sensors verbunden ist, daß der Signalgenerator einen weiteren Frequenzsignal-Ausgang aufweist, der am nichtinvertierenden Eingang eines Referenz-Operationsverstärkers hegt, dessen Ausgang mit dem Gate eines weiteren FET verbunden ist, der seinerseits über Source auf den invertierenden Eingang des Referenz-Operationsverstärkers zurückgekoppelt und mit einer weiteren Konstantstromquelle sowie mit einem andererseits auf Potential der elektrischen Rückführung liegenden Kondensator verbunden ist, und daß die Drain-Anschlüsse der beiden FETs einem Differenzstromverstärker zugeführt sind, dessen Stromausgang am invertierenden Eingang des mit seinem nichtinvertierenden Eingang auf Potential der elektrischen Rückführung liegenden Ladungsverstärkers angeschlossen ist. Daraus ist ersichtlich, daß die Signalsubtraktion bzw. Differenzbildung nicht nur wie bisher angesprochen mit einem Differenzspannungsverstärker, sondern auch mit einem Differenzstromverstärker, z.B. mit einer Stromspiegelschaltung, durchgeführt werden kann. Damit kann dann anstelle der beiden Ladungsverstärker für die Ströme der Teilzweige auch ein gemeinsamer für den Differenzstrom eingesetzt werden.

Nach einer weiteren Ausgestaltung der Erfindung ist vorgesehen, daß der Signalgenerator mittels einer aktiven Rückkopplung des am Ausgang des als Bandpaß ausgeführten Hochpaßfilters zur Verfügung stehenden Signals an den nichtinvertierenden Eingang eines Operationsverstärkers sowie den nichtinvertierenden Eingang eines Referenz-Operationsverstärkers realisiert ist, daß der Ausgang dieser beiden Operationsverstärker jeweils am Gate eines FET hegt, dessen Source jeweils an einer separaten Konstantstromquelle hegt und auf den invertierenden Eingang des jeweiligen Operationsverstärker rückgekoppelt ist, wobei im Falle des

6

Operationsverstärkers zusätzlich die Signalleitung des Sensors mit Source verbunden ist und im Falle des Referenz-Operationsverstärkers zusätzlich eine Verbindung von Source über eine einstellbare Kapazität an das Potential der elektrischen Rückführung besteht, daß die Drain-Anschlüsse der beiden FETs einem Differenzstromverstärker und i/u-Konverter zugeführt sind, dessen Ausgang einerseits mit einem Bandpaßfilter und andererseits über einen Widerstand mit dem invertierenden Eingang des Ladungsverstärkers verbunden ist, wobei vorzugsweise in der Rückkopplung zwischen Bandpaß und nichtinvertierenden Eingängen der beiden Operationsverstärker eine automatische Verstärkungskontrolleinheit (AGC) eingeschaltet ist. Es ist hier also wiederum ein Differenzstromverstärker verwendet, wobei aber nun aus dem Differenzstrom ein proportionales Spannungssignal erzeugt wird. Dieses kann beispielsweise über einen Integrator verstärkt werden, wonach über den Tiefpaß wiederum das zur Ladung und damit zum mechanischen Eingangssignal proportionale Signal zur Verfügung steht. Andererseits kann das Spannungssignal am Ausgang des Differenzstromverstärkers dazu verwendet werden, um die Schaltung als frei schwingenden Oszillator mit geschlossener Rückkopplung zu betreiben. Die AGC-Einheit sorgt wiederum für die Einhaltung der Amplitudenbedingung (Schleifenverstärkung gleich 1), wobei im Resonanzfall des piezoelektrischen Wandlerelementes auch die Phasenbedingung (Phasenunterschied in der Schleife gleich Null) erfüllt ist. Das Bandpaßfilter dient zur Selektion der gewünschten Resonanzfrequenz des Wandlerelements. Bei dieser Ausgestaltung kann beispielsweise nach dem Bandpaßfilter, das die Resonanzfrequenz des Wandlers charakterisierende Frequenzsignal abgegriffen werden.

Im letztgenannten Zusammenhang kann nach einer anderen Weiterbildung der Erfindung auch zwischen die automatische Verstärkungskontrolleinheit und die nichtinvertierenden Eingänge der beiden Operationsverstärker eine für die beiden Operationsverstärker gegenphasige Frequenzsignale erzeugende Treiberstufe eingeschaltet und anstelle des Differenzstromverstärkers eine Stromadditionsschaltung vorgesehen sein. Damit wird die erforderliche Subtraktion nicht wie oben beschrieben durch die Bildung des Differenzstromes der aus den beiden gleichphasigen Signalen erzeugten Ströme durchgeführt, sondern durch das Erzeugen gegenphasiger Signale und durch anschließende Addition der resultierenden Ströme. Der Strom-Spannungs-Konverter kann beispielsweise mit Hilfe eines über einen Widerstand rückgekoppelten Operationsverstärkers aufgebaut sein. Die beiden angesprochenen gegenphasigen Spannungssignale können mit Hilfe eines Differenzverstärkers mit symmetrischen Ausgängen erzeugt werden.

Nach einer besonders bevorzugten weiteren erfindungsgemäßen Ausbildung der zuletzt beschriebenen Meßanordnung kann vorgesehen sein, daß die Treiberstufe eine zusätzliche Einheit zur Amplitudenabstimmung der beiden gegenphasigen Frequenzsignale aufweist, daß der hochpaßgefilterte Ausgang des Ladungsverstärkers mit einem Synchrondemodulator in Verbindung steht, der weiters mit einer Einheit zur Erzeugung einer Phasenreferenz verbunden ist, welche ihrerseits mit einem der nichtinvertierenden Eingänge der beiden Operationsverstärker in Verbindung steht, und daß der Ausgang des Synchrondemodulators mit dem Istwert-Eingang eines Reglers verbunden ist, der weiters einen Sollwert-Eingang und einen Stellgrößen-Ausgang aufweist, welch letzterer mit der Einheit zur Amplitudenabstimmung verbunden ist. Es ergibt sich damit ein Präszisionsoszillator und Ladungsverstärker für das piezoelektrische Wandlerelement, wobei die Abstimmung der Schaltung wiederum selbsttätig mit Hilfe einer Amplitudenabstimmung der gegenphasigen Frequenzsignale erfolgt, welche von einem Regler, der den Sollwert Null mit dem von einem Synchrongleichrichter gelieferten Istwert vergleicht, gesteuert wird. Auf diese Art wird eine grobe Einstellung der Phasenbedingung der Oszillatorschaltung erreicht. Die Feineinstellung der Phasenbedingung und, im Zusammenhang mit der AGC-Einheit, die Einstellung der Amplitudenbedingung erfolgt wegen der Mitkoppelung der Schaltung nur bei der Resonanzfrequenz des piezoelektrischen Wandlerelementes, die über das genannte Bandpaßfilter selektiert wird.

Beschreibung der Zeichnung

Die Erfindung wird im folgenden noch anhand der in der Zeichnung teilweise schematisch dargestellten Schaltbilder näher erläutert. Es zeigt:

Fig. 1 die einfachste Form der Auskoppelung eines höherfrequenten, die Resonanzcharakteristik eines piezoelektrischen Wandlerelementes beschreibenden Signals und eines niederfrequenteren, die mechanische Einwirkung auf dieses Wandlerelement beschreibenden Signals aus dem über eine einzige Signalleitung geführten Meßsignal,

Fig. 2 das Grundschaltbild eines piezoelektrischen Wandlerelements mit Ladungsverstärker,

Fig. 3 das Grundschaltbild eines Resonanzdetektors, der ein piezoelektrisches Wandlerelement mit einer Kapazität in einem Spannungsteiler betreibt,

Fig. 4 bis 10 und Fig. 12 bis 16 jeweils erfindungsgemäß ausgebildete Meßanordnungen,

Fig. 11 eine an sich bekannte Ausführungsform einer gemäß den Fig. 10 und 12 bis 16 verwendeten Konstantstromquelle und

Fig. 17 bis 19 jeweils ein Beispiel für einen Sensor zur Verwendung in einer erfindungsgemäßen Meßanordnung bzw. mit dem entsprechenden Meßverfahren.

Wie oben bereits ausgeführt wird gemäß der vorliegenden Erfindung ein Sensor mit zumindest einem piezoelektrischen Wandlerelement über eine gemeinsame, einzige Signalleitung (gleichzeitig) auf zwei Arten in Betrieb genommen:

1.als eigentlicher Piezowandler, basieren auf dem direkten Piezoeffekt, wobei bei einer wirkenden mechanischen Größe (z.B. Kraft, Druck, Beschleunigung, usw.) am Ausgang ein elektrisches Ladungssignal erzeugt wird, und

2.als Piezoresonator, basierend einerseits auf dem reziproken Piezoeffekt, der die elektrische Anregung des Wandlerelementes zu mechanischen Schwingungen ermöglicht, und andererseits auf dem direkten Piezoeffekt, aufgrund dessen eine piezoelektrische Rückwirkung auf das Anregungssignal erfolgt.

Für die erste Betriebsart ist vorzugsweise ein Ladungsverstärker zur Auswertung vorgesehen, der einen (virtuellen) Kurzschluß am Wandlerelement erzeugt. In der zweiten Betriebsart darf das Wandlerelement nicht kurzgeschlossen sein, da es ja mit einem elektrischen Signal zu Schwingungen angeregt werden muß, damit die piezoelektrische Rückwirkung dieser Schwingungen auf das Anregungssignal meßbar wird. Beachtet man nun, daß die erste Betriebsart sinnvoll bei Frequenzen erfolgt, die unterhalb der für die zweite Betriebsart wichtigen Resonanzfrequenzen des Wandlerelementes hegen, so ergibt sich die Forderung nach einem Meßverstärker, der für niedrige Frequenzen als Ladungsverstärker wirkt und bei höheren Frequenzen das Wandlerelement zu Schwingungen anregt, deren piezoelektrische Rückwirkung auf das Anregungssignal meßbar sein muß.

Im einfachsten Fall, wenn nämlich die beiden Frequenzbereiche genügend weit auseinander hegen, reicht für die Erfüllung der obigen Forderung eine Entkoppelung der auf der gemeinsamen Signalleitung 2 vom Wandlerelement 1 kommenden Signale gemäß Fig. 1 mit einer Induktivität $L_K$ und einer Kapazität $C_K$. Da jedoch z.B. bei Quarzdruckaufnehmern der Frequenzbereich der ersten Betriebsart bis nahe an den Frequenzbereich der zweiten Betriebsart heranreicht, genügt im Normalfall eine einfache L-C-Entkoppelung der beiden in Fig. 1 unabhängig dargestellten Auswertegeräte (Ladungsverstärker 3 und Resonanzdetektor 4) nicht.

Fig. 2 zeigt die Prinzipschaltung eines Ladungsverstärkers mit angeschlossenem piezoelektrischen Wandlerelement 1. Die Signalleitung 2 liegt am invertierenden Eingang (-) eines Operationsverstärkers 5, dessen nichtinvertierender Eingang (+) auf dem Potential der Rückführung liegt und dessen Ausgang 6 über eine Kapazität $C_r$ auf den invertierenden Eingang rückgekoppelt ist. Die am Ausgang 6 des Operationsverstärkers 5 und damit des Ladungsverstärkers zur Verfügung stehende Spannung ist damit proportional der Größe der mechanischen Einwirkung auf das piezoelektrische Wandlerelement 1 (soweit sich keine Mißverständnisse ergeben können, sind im folgenden die Ausdrücke "Operationsverstärker" und "Ladungsverstärker" im Zusammenhang mit dem mit 5 bezeichneten Bauteil gleichzeitig verwendet - gleiches gilt übrigens auch für den Ausdruck "Sensor" und "Wandlerelement").

In Fig. 3 ist die Prinzipschaltung eines Resonanzdetektors dargestellt, mit einem Signalgenerator 7, dem eigentlichen Detektor 8 und einer Kapazität $C_o$, wobei hier das piezoelektrische Wandlerelement 1 als Resonator mit der Kapazität $C_o$ in einem Spannungsteiler betrieben wird.

Fig. 4 zeigt nun die Prinzipschaltung einer erfindungsgemäßen Meßanordnung in einer einfachen Ausführung. Der Signalgenerator 7 steuert den nichtinvertierenden Eingang (+) des Operationsverstärkers 5 mit einem Frequenzsignal an, dessen Mittelwert gleich dem Massepotential ist. Der Operationsverstärker 5 liefert an seinem Ausgang 6 eine Überlagerung der Signale beider Betriebsarten, also (bis auf ein DC-Offset):

$$u_A = \frac{-Q}{C_o} + u_1 \cdot (1 + \frac{C + jD}{C_o})$$

Dabei bedeutet:

$u_A$ ...      Ausgangsspannung des Operationsverstärkers 5

$C_o$ ...      Rückkopplungskapazität

$Q$ ...      vom Wandlerelement 1 abgegebene elektrische Ladung

$u_1$ ...      Frequenzsignal am nichtinvertierenden Eingang (+)

$C$ ...      Realteil der komplexwertigen Wandlerkapazität; bedeutet in erster Näherung die elektrostatische Kapazität des Wandlers

$D$ ...      Imaginärteil der komplexwertigen Wandlerkapazität;

$j$ ...      imaginäre Einheit

Mit Hilfe eines Hochpaßfilters 9 und eines Tiefpaßfilters 10 können aus dem Ausgangssignal des Verstärkers 5 das niederfrequente Signal $u_{NF}$ des "Ladungsverstärkers" und das höherfrequente Signal $u_{HF}$ für den "Resonanzdetektor" gewonnen werden.

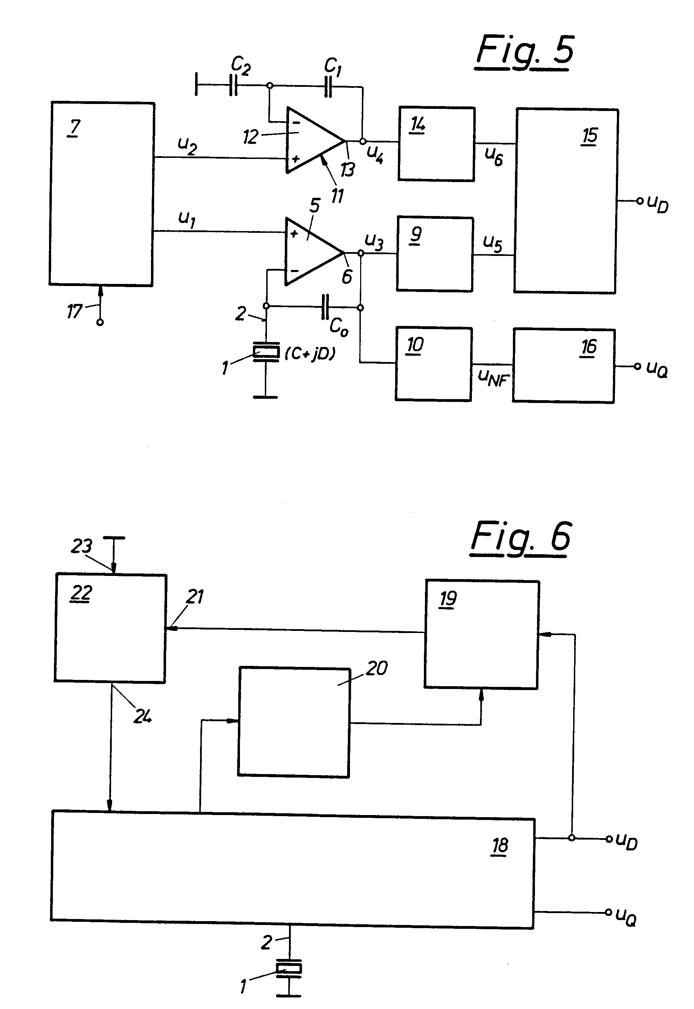

Fig. 5 zeigt nun eine Ergänzung der in Fig. 4 dargestellten Schaltung, um ein deutlicheres, für die Resonanzen des Wandlerelementes charakteristischeres Ausgangssignal zu gewinnen. Dazu weist der Signalgenerator 7 einen weiteren Frequenzsignal-Ausgang auf, der - bezogen auf das am nichtinvertierenden Eingang (+) des Ladungsverstärkers (bzw. des Operationsverstärkers 5 im Ladungsverstärker) liegende Signal $u_1$ - ein in der Frequenz und Phase gleiches und in der Amplitude abstimmbares Referenzsignal $u_2$ führt und mit dem nichtinvertierenden Eingang (+) eines Referenzladungsverstärkers 11 verbunden ist. Der invertierende Eingang (-) des im Referenzladungsverstärker 11 angeordneten Operationsverstärkers 12 ist über eine Kapazität $C_2$ mit dem Potential der Rückführung verbunden und über eine weitere Kapazität $C_1$ mit seinem Ausgang 13 rückgekoppelt. Der über ein weiters Hochpaßfilter 14 geführte Ausgang 13 des Referenzladungsverstärkers 11 ist ebenso wie der Ausgang 6 (über das Hochpaßfilter 9) mit einem Differenzverstärker 15 verbunden, an dessen Ausgang nun das die Resonanzcharakteristik des piezoelektrischen Wandlerelementes 1 beschreibende Signal $u_D$ abgreifbar ist.

Der das Signal $u_{NF}$ führende Ausgang des Tiefpaßfilters 10 ist mit dem Eingang eines Nachverstärkers 16 verbunden, an dessen Ausgang ein aufbereitetes Signal $u_Q$ zur Verfügung steht.

Mit V = Verstärkungsfaktor ergibt sich damit:

$$u_D \ = \ V \cdot [u_1 \cdot (1 + \frac{C + jD}{C_o}) \ - \ u_2 \cdot (1 + \frac{C_2}{C_1})]$$

Nimmt man die Amplituden-Abstimmung am Eingang 17 des Signalgenerators 7 so vor, daß der Realteil von $u_D$ durch die Subtraktion verschwindet, so erhält man die gewünschte Größe, die proportional zum dissipativen Teil D der komplexwertigen Wandlerkapazität (C + jD) ist:

$$Im \ (u_D) \ = \ u_1 \cdot V \cdot \frac{D}{C_o}$$

$$Re(u_D) \ = \ 0 \qquad \underline{für} \qquad u_1 \cdot (1 + \frac{C}{C_o}) \ = \ u_2 \cdot (1 + \frac{C_2}{C_1})$$

Gleichzeitig kann man das nachverstärkte Signal $u_Q$ des "Ladungsverstärkers" messen, das proportional zur einwirkenden mechanischen Größe ist.

Fig. 6 zeigt die Erweiterung der Schaltung nach Fig. 5 (symbolisiert durch das Kästchen 18) durch einen Regler zur automatischen Abstimmung der Meßschaltung. Der hochpaßgefilterte Ausgang des Differenzverstärkers (Signal $u_D$) steht mit einem Synchrondemodulator 19 in Verbindung, der weiters mit einer Einheit 20 zur Erzeugung einer Phasenreferenz verbunden ist, welche ihrerseits mit dem Signalgenerator (7 in Fig. 5) verbunden ist, vorzugsweise mit einem der Frequenzsignalausgänge davon. Der Ausgang des Synchrondemodulators 19 ist mit dem Istwert-Eingang 21 eines Reglers 22 verbunden, der weiters einen Sollwert-Eingang 23 und einen Stellgrößen-Ausgang 24 aufweist. Dieser Stellgrößen-Ausgang 24 kann beispielsweise unmittelbar am Eingang 17 gemäß Fig. 5 oder aber an einer nicht weiter dargestellten Abstimmeinheit zur Abstimmung der relativen Amplituden der beiden Ausgangssignale $u_1$, $u_2$ des Signalgenerators aufeinander, liegen. Im Synchrondemodulator 19 wird mit Hilfe der genannten Phasenreferenz der Realteil von $u_D$ gewonnen und in der geschlossenen Regelschleife auf Null abgestimmt.

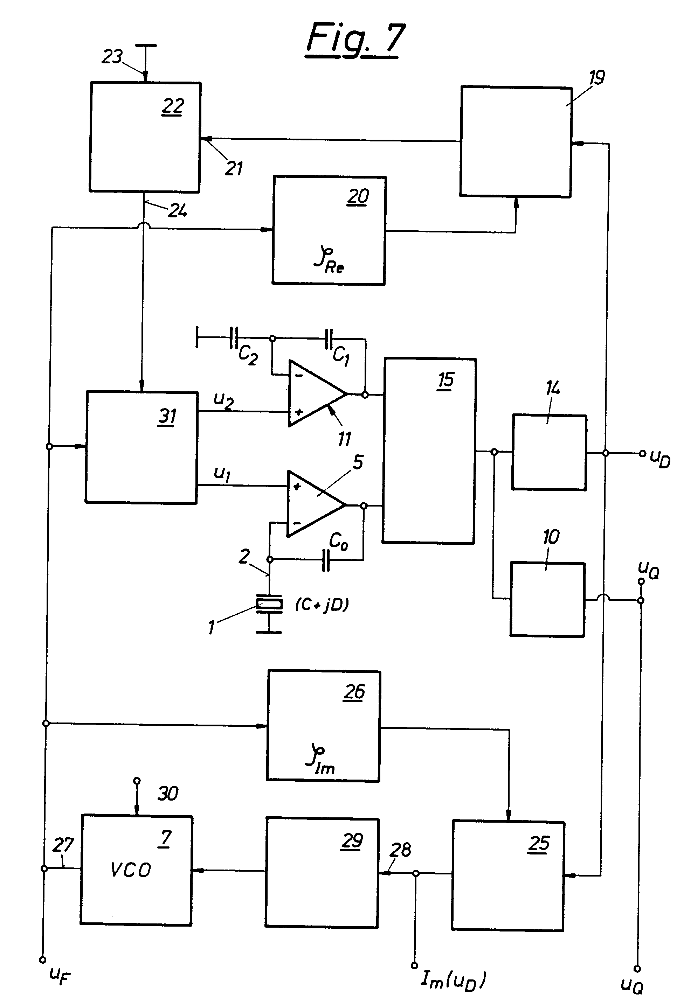

Fig. 7 zeigt die Erweiterung der Resonanz-Meßschaltung zu einem Oszillator. Der obere Teil der Darstellung entspricht im wesentlichen einer Kombination der Fig. 5 und 6, wobei in Abweichung der Darstellung zu Fig. 5 hier lediglich die Reihenfolge von Differenzverstärkung und Filterung vertauscht ist. Gleiche bzw. zumindest funktionell gleiche Bauteile sind wiederum mit den bereits vorher verwendeten Bezugszeichen versehen.

Im unteren Teil der Darstellung gemäß Fig. 7 ist zu ersehen, daß der hochpaßgefilterte Ausgang des Differenzverstärkers 15 (Signal $u_D$) mit einem weiteren Synchrondemodulator 25 verbunden ist, der seinerseits mit einer Phasenreferenzeinheit 26 in Verbindung steht. Die Phasenreferenzeinheit 26 ist wiederum ihrerseits mit dem Frequenzsignalausgang 27 des als VCO (Voltage Controlled Oscillator) ausgebildeten Signalgenerators 7 verbunden. Der Ausgang des Synchrondemodulators 25 ist mit dem Eingang 28 eines Maximumreglers 29 verbunden, der zur Feinabstimmung des VCO (7), der vorzugsweise über einen Eingang 30 unabhängig grob abstimmbar ist, mit diesem in Verbindung steht.

Mit Hilfe des Maximumreglers 29 wird der VCO auf die Frequenz maximaler Verlustleistung, also auf die Resonanzfrequenz des Wandlerelementes 1 eingestellt. Im Synchrondemodulator 25 wird dazu mit Hilfe der Phasenreferenz aus der Einheit 26 der Imaginärteil von $u_D$ gewonnen und als Istwert dem Maximumregler 29 zugeführt. Damit stehen drei Ausgangssignale gleichzeitig zur Verfügung:

1. Das Ausgangssignal $u_Q$ des "Ladungsverstärkers",

2. das Ausgangssignal $u_F$ zur Resonanzfrequenz des Wandlerelementes und

3. das Ausgangssignal mit dem Imaginärteil von $u_D$, welcher charakteristisch für die Dissipation im Wandler ist.

Ergänzend ist zu Fig. 7 noch darauf hinzuweisen, daß hier der Regler 22 auf eine separate Abstimmeinheit 31 zur Amplitudenabstimmung der beiden Signale $u_1$ und $u_2$ einwirkt, welcher der Frequenzsignalausgang 27 des VCO zugeführt ist.

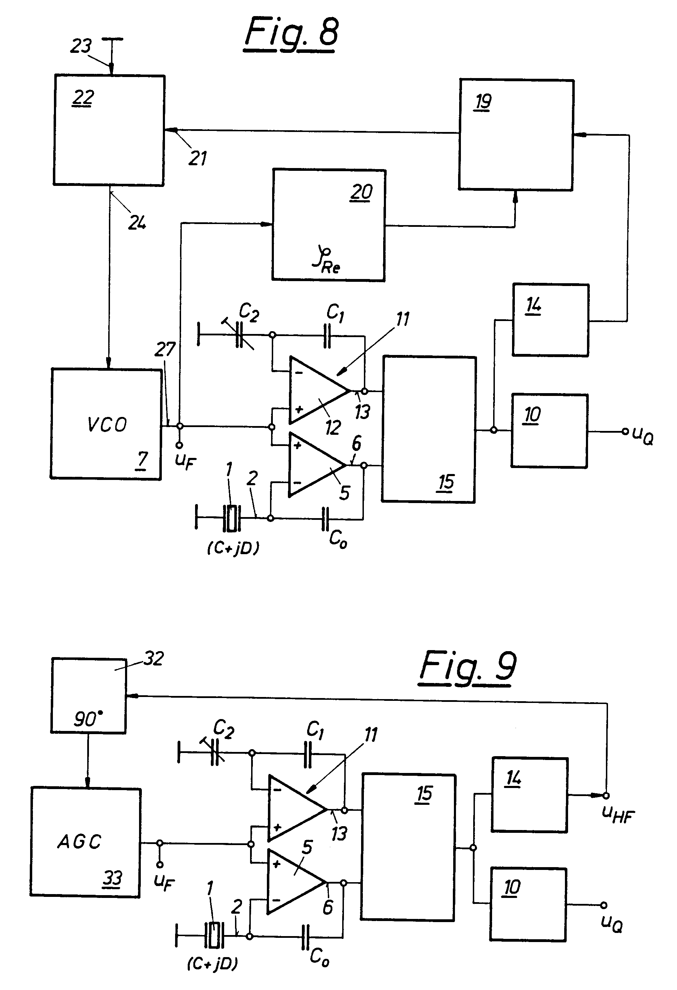

Gemäß Fig. 8 ist der Signalgenerator 7 wiederum als VCO ausgebildet, dessen Frequenzsignalausgang 27 auch mit dem nichtinvertierenden Eingang (+) des im Referenzladungsverstärker 11 angeordneten Operationsverstärkers 12 verbunden ist. Der invertierende Eingang (-) dieses Operationsverstärkers 12 liegt über eine einstellbare Kapazität $C_2$ auf dem Potential der Rückführung und ist über die Kapazität $C_1$ mit dem Ausgang 13 rückgekoppelt. Der Ausgang 13 des Referenzladungsverstärkers 11 ist ebenso wie der Ausgang 6 des eigentlichen Ladungsverstärkers 5 wiederum mit einem Differenzverstärker 15 verbunden. Der Ausgang des Differenzverstärkers 15 liegt über ein Hochpaßfilter 14 wie in Fig. 7 an einem Synchrondemodulator 19; über das Tiefpaßfilter 10 erhält man wiederum das Ausgangssignal $u_Q$.

Dem Synchrondemodulator 19 ist weiters das Ausgangssignal einer ebenfalls mit dem Frequenzsignalausgang 27 des VCO verbundenen Phasenreferenzeinheit 20 zugeführt. Der Ausgang des Synchrondemodulators 19 ist mit dem Istwert-Eingang 21 eines Reglers 22 verbunden, welcher zusätzlich noch einen Sollwert-Eingang 23 aufweist und über einen Stellgrößen-Ausgang 24 mit einem Frequenzregler-Eingang des VCO verbunden ist.

Die Schaltung gemäß Fig. 8 behandelt damit eine Variante des Meßverstärkers zum Betrieb als Ladungsverstärker einerseits und als Oszillator für eine Frequenz andererseits. Verzichtet man auf den Regler 22 gemäß Fig. 6 zur automatischen Abstimmung der Meßschaltung und sieht statt dessen vor, die erforderliche Abstimmung bei der Inbetriebnahme der Schaltung vorzunehmen und während des Betriebes nicht nachzustimmen, so kann das Abstimmkriterium (nämlich daß der Realteil von $u_D$ Null ist) zur Erzeugung jener Frequenz verwendet werden, für die diese Bedingung erfüllt ist. Die Vorabstimmung kann per Hand oder rechnergesteuert aufgrund einer vorausgehenden Analyse der mit Hilfe des Resonanzdetektors gewonnenen Resonanzcharakteristik des piezoelektrischen Wandlerelementes 1 erfolgen, sodaß die Frequenz eine Resonanzfrequenz dieses Elements ist. Als abzustimmende Bauelemente kommen prinzipiell ein oder mehrere der eingezeichneten Kapazitäten sowie auch eine hier nicht eingetragene (abstimmbare) Kapazität parallel zum piezoelektrischen Wandlerelement 1 in Frage.

Fig. 9 zeigt eine erfindungsgemäße Meßanordnung mit einem Meßverstärker als Ladungsverstärker und als Oszillator mit direkter Rückkoppelung, ohne zwischengeschalteten VCO. Der eigentliche Signalgenerator ist hier mittels einer aktiven Rückkoppelung des am Ausgang des als Bandpaß ausgeführten Hochpaßfilters 14 zur Verfügung stehenden Signals $u_{HF}$ an den nichtinvertierenden Eingang (+) des Ladungsverstärkers 5 sowie den nichtinvertierenden Eingang (+) des Referenzladungsverstärkers 11 realisiert ist. Der Ausgang 13 des Referenzladungsverstärkers 11 ist ebenso wie der Ausgang 6 des Ladungsverstärkers 5 wiederum mit einem Differenzverstärker 15 verbunden, dessen Ausgang dem Bandpaß (14) und dem Tiefpaßfilter 10 zugeführt ist. In der aktiven Rückkoppelung ist ein 90°-phasendrehendes Glied 32 und eine automatische Verstärkungskontrolleinheit (AGC) 33 eingeschaltet.

Der z.B. per Hand mit Hilfe der Kapazität $C_2$ abgestimmte Resonanzdetektor liefert im Resonanzfall des piezoelektrischen Wandlerelementes 1 ein maximales Ausgangssignal, dessen Phase um 90° gegenüber dem anregenden Signal $u_F$ gedreht ist. Um der Rückkoppelbedingung für ungedämpfte Schwingungen zu genügen, wird das Ausgangssignal zusätzlich im Glied 32 um 90° phasengedreht. Über die Verstärkungskontrolleinheit 33 wird die Schleifenverstärkung auf den erforderlichen Wert 1 geregelt. Der Bandpaß (14) dient zur Selektion einer Resonanz innerhalb eines bestimmten Frequenzbandes. Über das Tiefpaßfilter 10 kann wiederum das niederfrequente Signal $u_Q$ des Ladungsverstärkers abgegriffen werden.

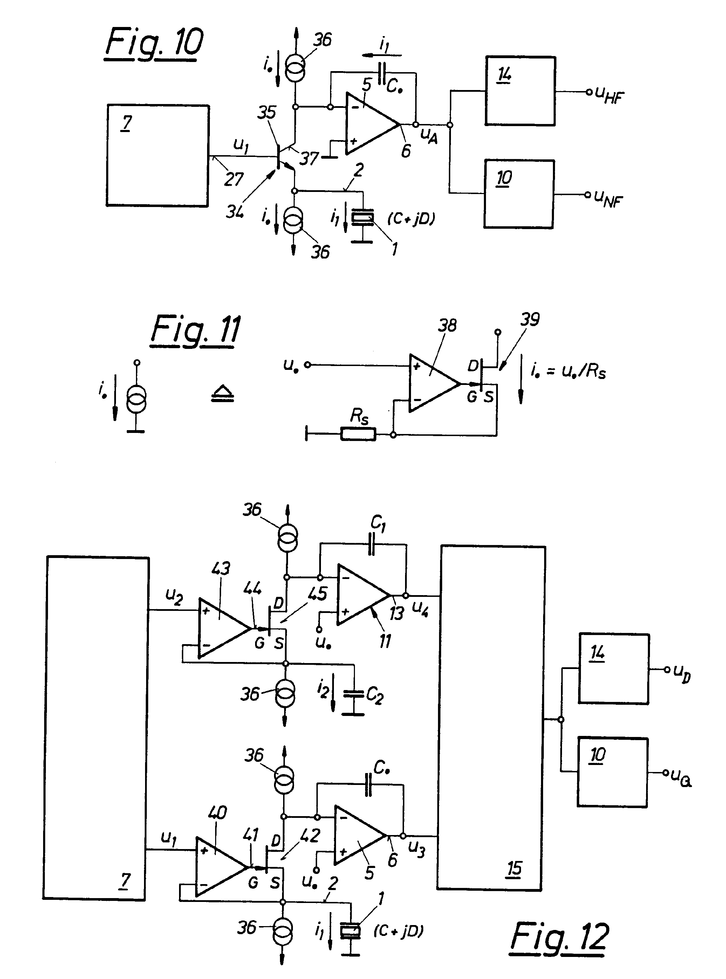

Fig. 10 zeigt eine weitere Variante der Meßanordnung nach Fig. 4. Der Frequenzsignalausgang 27 des Signalgenerators 7 ist über einen Emitterfolger 34 mit der Signalleitung 2 des Sensors bzw. Wandlerelementes 1 verbunden. In der Emitter- und in der Kollektorleitung des Emitterfolger-Transistors 35 ist jeweils eine Konstantstromquelle 36 eingeschaltet. Der Kollektor 37 des Emitterfolger-Transistors 35 ist mit dem invertierenden Eingang (-) des Ladungsverstärkers 5 verbunden, dessen nichtinvertierender Eingang (+) auf Potential der Rückführung hegt. Die beiden Konstantstromquellen 36 dienen dabei zur Definition des DC-Arbeitspunktes des Transistors 35.

Das Ausgangssignal $u_A$ am Ausgang 6 des Ladungsverstärkers 5 läßt sich dabei (bis auf ein DC-Offset) so darstellen:

$$u_A = -Q/C_o + u_1 \cdot (C + jD)/C_o$$

Wie bei der Meßanordnung nach Fig. 4 dienen auch hier das Hochpaßfilter 14 und das Tiefpaßfilter 10 zur Auftrennung in die zwei Signale $u_{NF}$ und $u_{HF}$.

Fig. 11 zeigt als Erläuterung zu Fig. 10 eine an sich bekannte Ausführungsform für die Konstantstromquellen 36 als Präzisions-Konstantstromquelle. Ein Operationsverstärker 38 steuert einen Feldeffekttransistor (FET) 39 derart, daß die Spannung am Source-Widerstand $R_S$ des FET 39 gleich der Eingangsspannung $u_o$ ist. Das ist dann der Fall, wenn am Drain-Anschluß des FET 39 ein Strom $i_o = u_o/R_S$ gezogen wird. Der Innenwiderstand einer solchen Stromquelle kann extrem groß (wesentlich größer als ein GΩ) gemacht werden.

In Fig. 12 ist in Analogie zu Fig. 5 nun die Erweiterung der Schaltung bzw. Meßanordnung nach Fig. 10 zu einem Resonanzdetektor gezeigt, dessen Empfindlichkeit für die Resonanzcharakteristik durch subtraktive Kompensation der Parallelkapazität des Wandlerelementes 1 wesentlich gesteigert wird. Der Frequenzsignalausgang (Signal $u_1$) des Signalgenerators 7 liegt am nichtinvertierenden Eingang (+) eines Operationsverstärkers 40, dessen Ausgang 41 mit dem Gate eines FET 42 verbunden ist, der seinerseits über Source auf den invertierenden Eingang (-) des Operationsverstärkers 40 rückgekoppelt und mit einer Konstantstromquelle 36 sowie mit der Signalleitung 2 des Sensors bzw. Wandlerelementes 1 verbunden ist. Der invertierende Eingang (-) des Ladungsverstärkers 5 ist mit Drain des FET 42 und mit einer weiteren Konstantstromquelle 36 verbunden - der nichtinvertierende Eingang (+) des Ladungsverstärkers 5 liegt auf einem Ruhepotential $u_o$, sodaß auch das Drain-Potential des FET 42 auf diesen für den Betrieb des FET 42 geeigneten Wert eingestellt wird.

Der Signalgenerator 7 weist einen weiteren Frequenzsignalausgang (Signal $u_2$) auf, der am nichtinvertierenden Eingang (+) eines Referenz-Operationsverstärkers 43 liegt, dessen Ausgang 44 mit dem Gate eines weiteren FET 45 verbunden ist. Dieser FET 45 ist über Source auf den invertierenden Eingang (-) des Referenz-Operationsverstärkers 43 rückgekoppelt und mit einer Konstantstromquelle 36 sowie mit einem andererseits auf Potential der Rückführung liegenden Kondensator $C_2$ verbunden. Der invertierende Eingang (-) eines Referenz-Ladungsverstärkers 11 ist mit Drain des weiteren FET 45 und mit einer weiteren Konstantstromquelle 36 verbunden. Der nichtinvertierende Eingang (+) des Referenz-Ladungsverstärkers 11 liegt auf demselben Ruhepotential $u_o$ wie beim Ladungsverstärker 5, sodaß auch das Drain-Potential auf diesen für den Betrieb des FET 45 geeigneten Wert eingestellt wird.

Die Ausgänge von Ladungsverstärker 5 einerseits und Referenz-Ladungsverstärker 11 andererseits (Signale $u_3$ und $u_4$) sind einem Differenzspannungsverstärker 15 zugeführt, dessen Ausgang wiederum am Eingang eines Hochpaß- sowie eines Tiefpaßfilters (14, 10) liegt.

Bis auf konstante Verstärkungsfaktoren beliebigen Vorzeichens erhält man dabei folgende Ausgangssignale:

$$u_Q = V_Q \cdot Q/C_o$$
$$u_D = V_D \cdot (u_1 \cdot (C + jD)/C_o - u_2 \cdot C_2/C_1)$$

Nimmt man die Abstimmung so vor, daß der Realteil von $u_D$ durch die Subtraktion verschwindet, so erhält man die gewünschte Größe, die proportional zum dissipativen Teil D der komplexwertigen Wandlerkapazität $(C + jD)$ ist:

$$\mathrm{Re}\,(u_D) = 0 \qquad \underline{\text{für}} \qquad u_1 \cdot C/C_o = u_2 \cdot C_2/C_1$$
$$\mathrm{Im}\,(u_D) = u_1\, V_D \cdot D/C_o$$

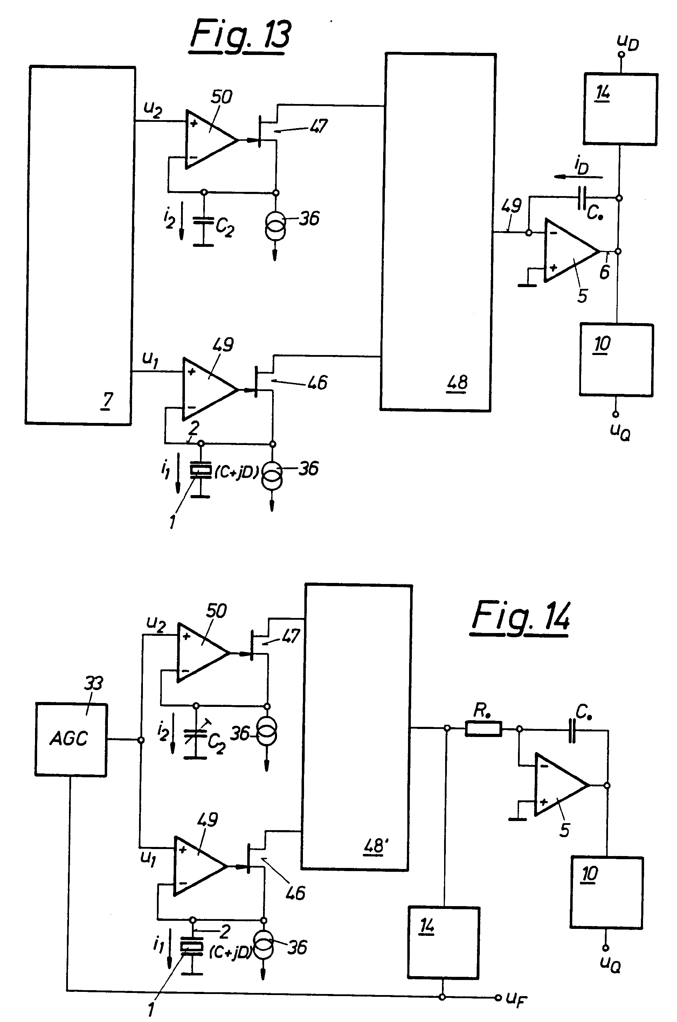

Bei der Meßanordnung nach Fig. 13 liegt der Frequenzsignalausgang ($u_1$) des Signalgenerators 7 am nichtinvertierenden Eingang (+) eines Operationsverstärkers 49, dessen Ausgang mit dem Gate eines FET 46 verbunden ist, der seinerseits über Source auf den invertierenden Eingang (-) des Operationsverstärkers 49 rückgekoppelt und mit einer Konstantstromquelle 36 sowie mit der Signalleitung 2 des Wandlerelementes 1 im Sensor verbunden ist. Der Signalgenerator 7 weist einen weiteren Frequenzsignal-Ausgang ($u_2$) auf, der am nichtinvertierenden Eingang (+) eines Referenz-Operationsverstärkers 50 liegt, dessen Ausgang mit dem Gate eines weiteren FET 47 verbunden ist, der seinerseits über Source auf den invertierenden Eingang (-) des Referenz-Operationsverstärkers 50 zurückgekoppelt und mit einer weiteren Konstantstromquelle 36 sowie mit einem andererseits auf Potential der elektrischen Rückführung liegenden Kondensator $C_2$ verbunden ist. Die Drain-Anschlüsse der beiden FETs 46, 47 sind einem Differenzstromverstärker 48 zugeführt, dessen Stromausgang 49 am invertierenden Eingang (-) des mit seinem nichtinvertierenden Eingang (+) auf Potential der elektrischen Rückführung liegenden Ladungsverstärkers 5 angeschlossen ist.

Damit ist gezeigt, daß die zur Verbesserung der Resonanz-Messung vorgenommene Differenzbildung nicht nur wie in den Ausführungsformen nach den bisher besprochenen Figuren mit einem Differenzspannungsverstärker, sondern auch mit einem Differenzstromverstärker, z.B. mit einer Stromspiegelschaltung, durchgeführt werden kann. Damit ist es möglich, anstelle der zwei Ladungsverstärker für die Ströme $i_1$ und $i_2$ einen gemeinsamen für den Differenzstrom einzusetzen.

Bei der Meßanordnung nach Fig. 14 ist der eigentliche Signalgenerator mittels einer aktiven Rückkopplung des am Ausgang des wiederum als Bandpaß ausgeführten Hochpaßfilters 14 zur Verfügung stehenden Signals $u_F$ an den nichtinvertierenden Eingang (+) eines Operationsverstärkers 49 sowie an den nichtinvertierenden Eingang (+) eines Referenz-Operationsverstärkers 50 realisiert. Der Ausgang dieser beiden Operationsverstärker 49, 50 liegt jeweils wiederum am Gate eines FET 46, 47, dessen Source jeweils an einer separaten Konstantstromquelle 36 liegt und auf den invertierenden Eingang (-) des jeweiligen Operationsverstärkers 49, 50 rückgekoppelt ist. Im Falle des Operationsverstärkers 49 ist zusätzlich die Signalleitung 2 des Wandlerelementes 1 im Sensor mit Source des FET 46 verbunden; im Falle des Referenz-Operationsverstärkers 50 besteht zusätzlich eine Verbindung von Source über eine einstellbare Kapazität $C_2$ an das Potential der elektrischen Rückführung.

EP 0 423 273 B1

Die Drain-Anschlüsse der beiden FETs 46, 47 sind wiederum einem Differenzstromverstärker 48' zugeführt, der hier zusätzlich einen i/u-Konverter umfaßt. Der Ausgang des Verstärkers 48' ist einerseits mit dem Bandpaßfilter 14 und andererseits über einen Widerstand $R_o$ mit dem invertierenden Eingang (-) des Ladungsverstärkers 5 verbunden. In der Rückkopplung zwischen Bandpaß 14 und nichtinvertierenden Eingängen (+) der beiden Operationsverstärker 49, 50 ist eine automatische Verstärkungskontrolleinheit (AGC) 33 eingeschaltet.

Somit enthält die Meßanordnung nach Fig. 14 ebenfalls wie diejenige nach Fig. 13 einen Differenzstromverstärker, nur daß nun aus dem Differenzstrom ein proportionales Spannungssignal erzeugt wird. Dieses wird einerseits über einen Integrator verstärkt, sodaß über den Tiefpaß 10 wiederum das Signal $u_Q$ zur Verfügung steht, das proportional zur Ladung und damit zum mechanischen Eingangssignal ist. Andererseits wird das Spannungssignal am Ausgang des Differenzstromverstärkers 48' dazu verwendet, um die Schaltung als freischwingenden Oszillator mit geschlossener Rückkopplung zu betreiben. Die AGC-Einheit 33 sorgt dabei für die Einhaltung der Amplitudenbedingung (Schleifenverstärkung = 1), wobei im Resonanzfall des piezoelektrischen Wandler-Resonators auch die Phasenbedingung (Phasenunterschied Null in der Schleife) erfüllt ist. Das Bandpaßfilter 14 dient wiederum zur Selektion der gewünschten Resonanzfrequenz des Wandlerelementes 1. Das Frequenzsignal $u_F$ - die Resonanzfrequenz des Wandlerelementes 1 - kann wie dargestellt z.B. nach dem Bandpaßfilter 14 abgegriffen werden.

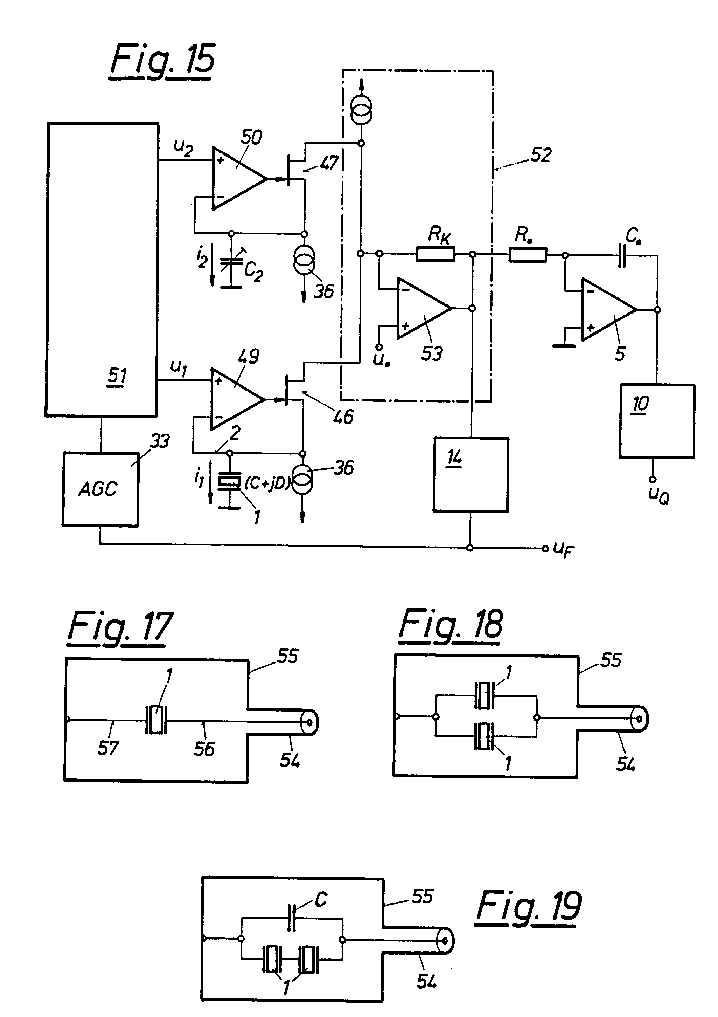

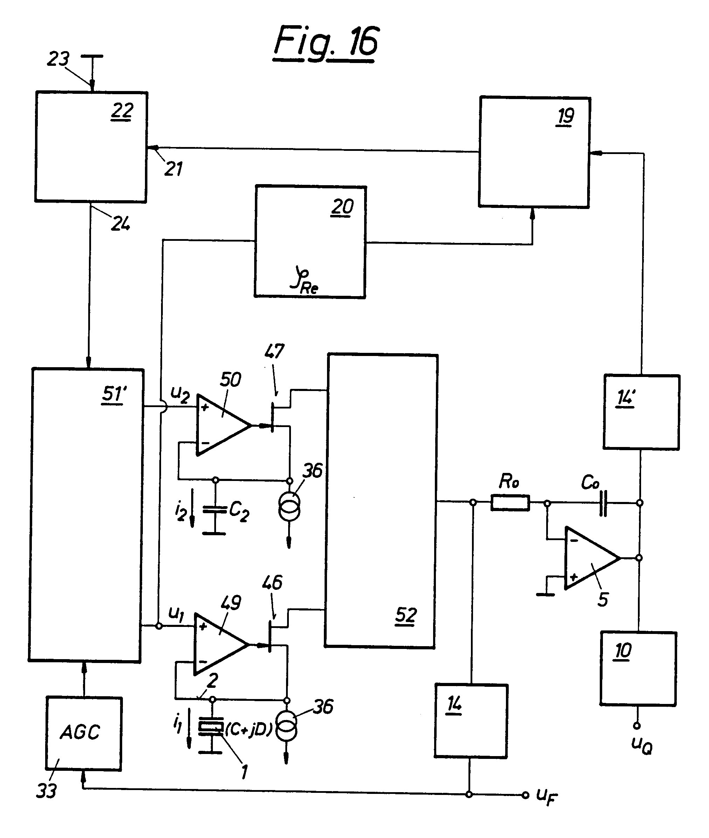

Die Ausführung nach Fig. 15 unterscheidet sich von der nach Fig. 14 im wesentlichen lediglich dadurch, daß nun zwischen die automatische Verstärkungskontrolleinheit (AGC) 33 und die nichtinvertierenden Eingänge (+) der beiden Operationsverstärker 49, 50 eine für die beiden Operationsverstärker gegenphasige Frequenzsignale erzeugende Treiberstufe 51 eingeschaltet ist, und daß anstelle des Differenzstromverstärkers 48' nun eine Stromadditionsschaltung 52 vorgesehen ist.

Die für die Referenzmessung erforderliche Subtraktion wird also gemäß Fig. 15 nicht wie nach Fig. 14 durch Bildung des Differenzstromes der aus den beiden gleichphasigen Signalen $u_1$ und $u_2$ erzeugten Ströme $i_1$ und $i_2$ durchgeführt, sondern durch das Erzeugen gegenphasiger Signale $u_1$ und $u_2$ und Addition der resultierenden Ströme $i_1$ und $i_2$. Der Strom-Spannungs-Konverter in der Schaltung 52 ist mit Hilfe eines über einen Widerstand $R_K$ rückgekoppelten Operationsverstärkers 53 realisiert. Die Erzeugung der gegenphasigen Signale $u_1$ und $u_2$ kann beispielsweise mit Hilfe eines Differenzverstärkers mit symmetrischen Ausgängen erfolgen.

Fig. 16 zeigt eine Erweiterung der Meßanordnung nach Fig. 15. Auf gleiche Art könnte übrigens auch beispielsweise die Anordnung nach Fig. 14 erweitert werden. Die Treiberstufe 51' weist hier eine nicht weiter dargestellte zusätzliche Einheit zur Amplitudenabstimmung der beiden gegenphasigen Frequenzsignale $u_1$ und $u_2$ auf. Der hochpaßgefilterte Ausgang (Hochpaßfilter 14') steht mit einem Synchrondemodulator 19 in Verbindung, der weiters wieder mit einer Einheit 20 zur Erzeugung einer Phasenreferenz verbunden ist, welche ihrerseits mit dem nichtinvertierenden Eingang (+) des Operationsverstärkers 49 in Verbindung steht. Der Ausgang des Synchrondemodulators 19 ist mit dem Istwert-Eingang 21 eines Reglers 22 verbunden, der weiters einen Sollwert-Eingang 23 und einen Stellgrößen-Ausgang 24 aufweist, welch letzterer mit der Einheit zur Amplitudenabstimmung in der Treiberstufe 51' in Verbindung steht. Es handelt sich bei der in Fig. 16 dargestellten Schaltung um einen Präzisionsoszillator und Ladungsverstärker für das piezoelektrische Wandlerelement 1 im entsprechenden Sensor, mit den Ausgängen $u_F$ für die Resonanzfrequenz und $u_Q$ für das Ladungssignal. Die Abstimmung der Anordnung erfolgt selbsttätig wie obenstehend zu Fig. 6 und 7 beschrieben mit Hilfe einer Amplitudenabstimmung von $u_1$ und $u_2$. Diese Abstimmung wird gesteuert vom Regler 22, der den Sollwert Null mit dem vom Synchrondemodulator gelieferten Istwert vergleicht. Auf diese Art wird eine grobe Einstellung der Phasenbedingung der Oszillatorschaltung erreicht. Die Feineinstellung der Phasenbedingung und, im Zusammenhang mit der AGC-Einheit 33, die Einstellung der Amplitudenbedingung erfolgt wegen der Mitkoppelung der Schaltung nur bei der Resonanzfrequenz des piezoelektrischen Wandlerelementes 1, die über das Bandpaßfilter 14 selektiert wird.

Fig. 17 zeigt symbolisch einen piezoelektrischen Sensor, der in einem mit einem Anschlußstecker 54 ausgestatteten Gehäuse 55 ein piezoelektrisches Wandlerelement 1 aufweist, das über Anschlüsse 56, 57 kontaktiert ist. Die Anordnung und spezielle Ausgestaltung des Wandlerelementes 1 ist hier nicht dargestellt - insbesondere kann dieses Element 1 aus an sich beliebig vielen Piezoelementen (z.B. Quarzscheiben) bestehen. Gemäß den obigen Ausführungen zur vorliegenden Erfindung dient dieses eine Wandlerelement 1 gemäß Fig. 17 für den Betrieb des Sensors in beiden möglichen Betriebsarten.

Gemäß Fig. 18 sind als einzig wesentliche Abweichung zu Fig. 17 zwei elektrisch parallel geschaltete piezoelektrische Wandlerelemente 1 vorgesehen, die unabhängig voneinander für den jeweiligen Betrieb optimiert sein können. So kann beispielsweise eines der Wandlerelemente 1 durch spezielle Ausbildung seiner Piezoelemente bzw. Halterungen derselben für den Betrieb als Resonator optimiert sein, während das andere Wandlerelement 1 auf den Betrieb unter Ausnützung des direkten Piezoeffektes optimiert ist. Es ist in diesem

12

Zusammenhang auch darauf hinzuweisen, daß es im Rahmen der vorliegenden Erfindung an sich belanglos ist, ob derartige mehrere piezoelektrische Wandlerelemente hinsichtlich der Einwirkung der zu messenden bzw. zu überwachenden Größe parallel oder hintereinander geschaltet sind.

Gemäß Fig. 19 sind wiederum zwei nun aber elektrisch in Serie geschaltete piezoelektrische Wandlerelemente 1 vorgesehen, die mit einer Kapazität C elektrisch parallel im Gehäuse 55 des Sensors angeordnet sind.

## Patentansprüche

1. Meßverfahren zur Bestimmung bzw. Überwachung von mechanischen und/oder physikalischen Größen, wobei ein zumindest ein piezoelektrisches Wandlerelement enthaltender Sensor (1) der zu bestimmenden bzw. überwachenden Größe ausgesetzt und ein von dieser Größe beeinflußtes elektrisches Sensorsignal auf einer einzigen Signalleitung (2) als Meßsignal ausgewertet wird, **dadurch gekennzeichnet,** daß der Sensor über die gemeinsame, einzige Signalleitung (2) samt elektrischer Rückführung in beiden möglichen Betriebsarten - einerseits bei niedrigen Frequenzen als Meßelement für eine mechanische Größe unter Ausnutzung des direkten Piezoeffektes und andererseits bei höheren Frequenzen als piezoelektrischer Resonator unter Ausnutzung des inversen Piezoeffektes zur elektrischen Anregung mechanischer Schwingungen und des direkten Piezoeffektes zur Erzeugung der piezoelektrischen Rückwirkung - betrieben wird und daß aus dem Meßsignal auf der Signalleitung ein höherfrequentes, die Resonanzcharakteristik beschreibendes Signal und ein niederfrequenteres, die mechanische Einwirkung beschreibendes, vorzugsweise ladungsproportionales Signal erzeugt wird.

2. Meßverfahren nach Anspruch 1, dadurch gekennzeichnet, daß über die Signalleitung ein höherfrequentes Anregungssignal zur Anregung des Sensors (1) zu mechanischen Schwingungen geliefert wird, dem ein in der Folge durch die piezoelektrische Rückwirkung des Sensors erzeugtes Signal gleicher Frequenz und ein vom Sensor aufgrund mechanischer, niederfrequenterer Einwirkungen generiertes niederfrequentes Signal überlagert werden, wobei der niederfrequente Anteil des Meßsignal auf der Signalleitung virtuell kurzgeschlossen und der dabei auftretende Kurzschlußstrom zur weiteren Signalverarbeitung verstärkt und vorzugsweise zu einem ladungsproportionalen Ausgangssignal integriert wird.

3. Meßverfahren nach Anspruch 2, dadurch gekennzeichnet, daß der höherfrequente Anteil des Meßsignals auf der Signalleitung (2) kapazitiv vom niederfrequenten Anteil entkoppelt wird.

4. Meßverfahren nach Anspruch 2, dadurch gekennzeichnet, daß das höherfrequente Anregungssignal auf der Signalleitung (2) spannungsmäßig eingeprägt wird und daß der gesamte Strom durch den Sensor, höherfrequente und niederfrequente Anteile, zur weiteren Signalverarbeitung herangezogen wird.

5. Meßverfahren nach einem der Anprüche 2 bis 4, dadurch gekennzeichnet, daß zur Bildung des höherfrequenten Signals die Differenz zwischen einem in Frequenz und Phase dem Anregungssignal entsprechenden, vom Sensor (1) unbeeinflußten Referenzsignal und dem Meßsignal gebildet wird, wobei das Anregungssignal und das Referenzsignal in ihren Amplituden relativ zueinander abstimmbar sind.

6. Meßverfahren nach Anspruch 5, dadurch gekennzeichnet, daß die Amplitudenabstimmung so vorgenommen wird, daß der Realteil des höherfrequenten Signals verschwindet.

7. Meßverfahren nach einem der Ansprüche 2 bis 6, dadurch gekennzeichnet, daß zur Bereitstellung des zur Schwingungsanregung dienenden Frequenzsignals das bandpaßgefilterte höherfrequente Signal phasenrichtig aktiv rückgekoppelt wird, vorzugsweise unter automatischer Abstimmung der Schleifensverstärkung auf den Faktor 1.

8. Meßanordnung, mit einem zumindest ein piezoelektrisches Wandlerelement enthaltenden Sensor (1) und einem damit über eine einzige Signalleitung (2) samt elektrischer Rückführung in Verbindung stehenden Meßverstärker, **dadurch gekennzeichnet,** daß der Sensor (1) für den Betrieb in den beiden möglichen Betriebsarten - einerseits bei niedrigen Frequenzen als Meßelement für eine mechanische Größe unter Ausnutzung des direkten Piezoeffektes und andererseits bei höheren Frequenzen als piezoelektrischer Resonator unter Ausnutzung des inversen Piezoeffektes zur elektrischen Anregung mechanischer Schwingungen und des direkten Piezoeffektes zur Erzeugung der piezoelektrischen Rückwirkung - über die gemeinsame, einzige Signalleitung (2) mit dem invertierenden Eingang (-) eines im Meßverstärker angeordneten Ladungsverstärkers (5) in Verbindung steht, daß der Ladungsverstärker (5) weiters mit dem Ausgang eines Signalgenerators (7) in Verbindung steht und von diesem mit einem Frequenzsignal ($u_1$) angesteuert ist, dessen Mittelwert gleich dem Potential der elektrischen Rückführung ist, und daß der über einen Kondensator (Co) auf den invertierenden Eingang (-) rückgekoppelte Ausgang (6) eines im Ladungsverstärker (5) angeordneten Operationsverstärkers einerseits mit dem Eingang eines Hochpaßfilters (9,14,14'), an dessen Ausgang ein von der Resonanzcharakteristik abhängiges Signal ($u_{HF}$, $u_F$) abgreifbar ist, und andererseits mit dem Eingang eines Tiefpaßfilters (10), an dessen Ausgang ein niederfrequenteres Ladungsverstärkersignal ($u_{NF}$, $u_Q$) abgreifbar ist, in Verbindung steht.

9. Meßanordnung nach Anspruch 8, dadurch gekennzeichnet, daß der Frequenzsignal-Ausgang (27) des Signalgenerators (7) mit dem nichtinvertierenden Eingang (+) des Ladungsverstärkers verbunden ist.

10. Meßanordnung nach Anspruch 9, dadurch gekennzeichnet, daß der Signalgenerator (7) einen weiteren Frequenzsignal-Ausgang aufweist, der - bezogen auf das am nichtinvertierenden Eingang (+) des Ladungsverstärkers (5) liegende Signal ($u_1$) - ein in der Frequenz und Phase gleiches und in der Amplitude abstimmbares Referenzsignal ($u_2$) führt und mit dem nichtinvertierenden Eingang (+) eines Referenzladungsverstärkers (11) verbunden ist, daß der invertierende Eingang (-) eines im Referenzladungsverstärker (11) angeordneten Operationsverstärkers (12) über eine Kapazität ($C_2$) mit dem Potential der Rückführung verbunden und über eine weitere Kapazität (Cf) mit seinem Ausgang (13) rückgekoppelt ist, daß der über ein weiteres Hochpaßfilter (14) geführte Ausgang des Referenzladungsverstärkers (11) ebenso wie der Ausgang des das Signal ($u_{HF}$) führenden Hochpaßfilters (9) mit einem Differenzverstärker (15) verbunden ist, an dessen Ausgang ein die Resonanzcharakteristik beschreibendes Signal ($u_D$) abgreifbar ist.

11. Meßanordnung nach Anspruch 8, dadurch gekennzeichnet, daß der das Signal ($u_{NF}$) führende Ausgang des Tiefpaßfilters (10) mit dem Eingang eines Nachverstärkers (16) verbunden ist, an dessen Ausgang ein aufbereitetes Signal ($u_Q$) zur Verfügung steht.

12. Meßanordnung nach Anspruch 10 oder 11, dadurch gekennzeichnet, daß der hochpaßgefilterte Ausgang des Differenzverstärkers (15) mit einem Synchrondemodulator (19) in Verbindung steht, der weiters mit einer Einheit (20) zur Erzeugung einer Phasenreferenz verbunden ist, welche ihrerseits mit dem Signalgenerator (7) verbunden ist, vorzugsweise mit einem der Frequenzsignalausgänge davon, und daß der Ausgang des Synchrondemodulators (19) mit dem Istwert-Eingang (21) eines Reglers (22) verbunden ist, der weiters einen Sollwerteingang (23) und einen Stellgrößenausgang (24) aufweist, welch letzterer mit einer Abstimmeinheit zur Abstimmung der relativen Amplituden der beiden Ausgangssignale ($u_1$, $u_2$) des Signalgenerators (7) aufeinander verbunden ist.

13. Meßanordnung nach Anspruch 12, dadurch gekennzeichnet, daß der hochpaßgefilterte Ausgang des Differenzverstärkers (15) mit einem weiteren Synchrondemodulator (25) verbunden ist, daß der weitere Synchrondemodulator (25) mit einer Phasenreferenzeinheit (26) verbunden ist, welche ihrerseits mit dem Frequenzsignalausgang (27) des als VCO ausgebildeten Signalgenerators (7) in Verbindung steht, daß der Ausgang des Synchrondemodulators (25) mit dem Eingang eines Maximumreglers (29) verbunden ist, welcher zur Abstimmung des VCO, der vorzugsweise unabhängig davon auch grobabstimmbar ist, mit diesem in Verbindung steht.

14. Meßanordnung nach Anspruch 9, dadurch gekennzeichnet, daß der Signalgenerator (7) als VCO ausgebildet ist, dessen Frequenzsignalausgang (27) auch mit dem nichtinvertierenden Eingang (+) eines in einem Referenzladungsverstärker (11) angeordneten Operationsverstärkers (12) verbunden ist, dessen invertierender Eingang (-) über eine einstellbare Kapazität ($C_2$) auf dem Potential der Rückführung liegt und über eine weitere Kapazität (Cf) mit seinem Ausgang (13) rückgekoppelt ist, daß der Ausgang (13) des Referenzladungsverstärkers (11) ebenso wie der Ausgang (6) des Ladungsverstärkers (5) selbst mit einem Differenzverstärker (15) verbunden ist, daß der hochpaßgefilterte Ausgang des Differenzverstärkers (15) mit einem Synchrondemodulator (19) verbunden ist, dem das Ausgangssignal einer ebenfalls mit dem Frequenzsignalausgang (27) des VCO (7) verbundenen Phasenreferenzeinheit (20) zugeführt ist und der mit seinem Ausgang mit dem Istwert-Eingang (21) eines Reglers (22) verbunden ist, und daß der weiters auch einen Sollwerteingang (23) aufweisende Regler einen Stellgrößenausgang (24) aufweist, der mit einem Frequenzregeleingang des VCO (7) verbunden ist.

15. Meßanordnung nach Anspruch 9, dadurch gekennzeichnet, daß der Signalgenerator mittels einer aktiven Rückkopplung des am Ausgang des als Bandpaß ausgeführten Hochpaßfilters (14) zur Verfügung stehenden Signals ($u_{HF}$) an den nichtinvertierenden Eingang (+) des Ladungsverstärkers (5) sowie den nichtinvertierenden Eingang (+) eines Referenzladungsverstärkers (11) realisiert ist, daß der Ausgang (13) des Referenzladungsverstärkers (11) ebenso wie der Ausgang (6) des Ladungsverstärkers (5) mit einem Differenzverstärker (15) verbunden ist, dessen Ausgang dem Bandpaß (14) und dem Tiefpaßfilter (10) zugeführt ist, und daß in der aktiven Rückkopplung ein 90°-phasendrehendes Glied (32) und vorzugsweise eine automatische Verstärkungskontrolleinheit (AGC) (33) eingeschaltet sind.

16. Meßanordnung nach Anspruch 8, dadurch gekennzeichnet, daß der Frequenzsignal-Ausgang (27) des Signalgenerators (7) über einen Emitterfolger (34) mit der Signalleitung (2) des Sensors (1) verbunden ist, daß in der Emitter- und in der Kollektorleitung des Emitterfolger-Transistors (35) jeweils eine Konstantstromquelle (36) eingeschaltet ist und daß der Kollektor (37) des Emitterfolger-Transistors (35) mit dem invertierenden Eingang (-) des Ladungsverstärkers (5) verbunden ist.

17. Meßanordnung nach Anspruch 8, dadurch gekennzeichnet, daß der Frequenzsignalausgang ($u_1$) des Signalgenerators (7) am nichtinvertierenden Eingang (+) eines Operationsverstärkers (40) liegt, dessen Ausgang (41) mit dem Gate eines FET (42) verbunden ist, der seinerseits über Source auf den invertierenden Eingang (-) des Operationsverstärkers (40) rückgekoppelt und mit einer Konstantstromquelle (36) sowie mit der Signalleitung (2) des Sensors (1) verbunden ist, und daß der invertierende Eingang (-) des Ladungsverstärkers (5) mit Drain des FET (42) und mit einer weiteren Konstantstromquelle (36) verbunden ist.

18. Meßanordnung nach Anspruch 17, dadurch gekennzeichnet, daß der Signalgenerator (7) einen weiteren Frequenzsignalausgang ($u_2$) aufweist, der am nichtinvertierenden Eingang (+) eines Referenz-Operationsverstärkers (43) liegt, dessen Ausgang (44) mit dem Gate eines weiteren FET (45) verbunden ist, der seinerseits über Source auf den invertierenden Eingang (-) des Referenz-Operationsverstärkers (43) rückgekoppelt und mit einer Konstantstromquelle (36) sowie mit einem andererseits auf Potential der Rückführung liegenden Kondensator ($C_2$) verbunden ist, daß der invertierende Eingang (-) eines Referenz-Ladungsverstärkers (11) mit Drain des weiteren FET (45) und mit einer weiteren Konstantstromquelle (36) verbunden ist, und daß weiters die Ausgänge (6,13) von Ladungsverstärker (5) einerseits und Referenz-Ladungsverstärker (11) andererseits einem Differenzspannungsverstärker (15) zugeführt sind, dessen Ausgang am Eingang des Hochpaß- sowie des Tiefpaßfilters (14,10) liegt.

19. Meßanordnung nach Anspruch 8, dadurch gekennzeichnet, daß der Frequenzsignalausgang ($u_1$) des Signalgenerators (7) am nichtinvertierenden Eingang (+) eines Operationsverstärkers (49) liegt, dessen Ausgang mit dem Gate eines FET (46) verbunden ist, der seinerseits über Source auf den invertierenden Eingang (-) des Operationsverstärkers (49) rückgekoppelt und mit einer Konstantstromquelle (36) sowie mit der Signalleitung (2) des Sensors (1) verbunden ist, daß der Signalgenerator (7) einen weiteren Frequenzsignal-Ausgang ($u_2$) aufweist, der am nichtinvertierenden Eingang (+) eines Referenz-Operationsverstärkers (50) liegt, dessen Ausgang mit dem Gate eines weiteren FET (47) verbunden ist, der seinerseits über Source auf den invertierenden Eingang (-) des Referenz-Operationsverstärkers (50) zurückgekoppelt und mit einer weiteren Konstantstromquelle (36) sowie mit einem andererseits auf Potential der elektrischen Rückführung liegenden Kondensator ($C_2$) verbunden ist, und daß die Drain-Anschlüsse der beiden FETs (46,47) einem Differenzstromverstärker (48) zugeführt sind, dessen Stromausgang (49) am invertierenden Eingang (-) des mit seinem nichtinvertierenden Eingang (+) auf Potential der elektrischen Rückführung liegenden Ladungsverstärkers (5) angeschlossen ist.

20. Meßanordnung nach Anspruch 8, dadurch gekennzeichnet, daß der Signalgenerator mittels einer aktiven Rückkopplung des am Ausgang des als Bandpaß (14) ausgeführten Hochpaßfilters zur Verfügung stehenden Signals ($u_F$) an den nichtinvertierenden Eingang (+) eines Operationsverstärkers (49) sowie den nichtinvertierenden Eingang (+) eines Referenz-Operationsverstärkers (50) realisiert ist, daß der Ausgang dieser beiden Operationsverstärker (49,50) jeweils am Gate eines FET (46,47) liegt, dessen Source jeweils an einer separaten Konstantstromquelle (36) liegt und auf den invertierenden Eingang (-) des jeweiligen Operationsverstärkers (49,50) rückgekoppelt ist, wobei im Falle des Operationsverstärkers (49) zusätzlich die Signalleitung (2) des Sensors (1) mit Source verbunden ist und im Falle des Referenz-Operationsverstärkers (50) zusätzlich eine Verbindung von Source über eine einstellbare Kapazität ($C_2$) an das Potential der elektrischen Rückführung besteht, daß die Drain-Anschlüsse der beiden FETs (46,47) einem Differenzstromverstärker und i/u-Konverter (48') zugeführt sind, dessen Ausgang einerseits mit einem Bandpaßfilter (14) und andererseits über einen Widerstand ($R_o$) mit dem invertierenden Eingang (-) des Ladungsverstärkers (5) verbunden ist, wobei vorzugsweise in der Rückkopplung zwischen Bandpaß (14) und nichtinvertierenden Eingängen (+) der beiden Operationsverstärker (49,50) eine automatische Verstärkungskontrolleinheit (AGC) (33) eingeschaltet ist.

21. Meßanordnung nach Anspruch 20, dadurch gekennzeichnet, daß zwischen die automatische Verstärkungskontrolleinheit (AGC) (33) und die nichtinvertierenden Eingänge (+) der beiden Operationsverstärker (49,50) eine für die beiden Operationsverstärker (49,50) gegenphasige Frequenzsignale ($u_1$, $u_2$) erzeugende Treiberstufe (51) eingeschaltet ist und daß anstelle des Differenzstromverstärkers eine Stromadditionsschaltung (52) vorgesehen ist.

22. Meßanordnung nach Anspruch 21, dadurch gekennzeichnet, daß die Treiberstufe (51') eine zusätzliche Einheit zur Amplitudenabstimmung der beiden gegenphasigen Frequenzsignale ($u_1$,$u_2$) aufweist, daß der hochpaßgefilterte Ausgang des Ladungsverstärkers (5) mit einem Synchrondemodulator (19) in Verbindung steht, der weiters mit einer Einheit (20) zur Erzeugung einer Phasenreferenz verbunden ist, welche ihrerseits mit einem der nichtinvertierenden Eingänge (+) der beiden Operationsverstärker (49,50) in Verbindung steht, und daß der Ausgang des Synchrondemodulators (19) mit dem Istwert-Eingang (21) eines Reglers (22) verbunden ist, der weiters einen Sollwert-Eingang (23) und einen Stellgrößen-Ausgang (24) aufweist, welch letzterer mit der Einheit zur Amplitudenabstimmung verbunden ist.

23. Verwendung einer Meßanordnung nach einem der Ansprüche 8 bis 22 zur Bestimmung bzw. Überwachung von mechanischen und/oder physikalischen Größen über die niederfrequenteren Teile des Meßsignals auf der Signalleitung (2) unter gleichzeitiger Überwachung der Funktion des Sensors (1) über das durch die höherfrequenten Teile des Meßsignals charakterisierte Resonanzverhalten, wobei der Sensor (1) ein einzelnes Wandlerelement aufweist, welches zumindest ein Piezoelement enthält.

24. Verwendung einer Meßanordnung nach einem der Ansprüche 8 bis 22 zur gleichzeitigen Bestimmung bzw. Überwachung von zumindest zwei unterschiedlichen mechanischen und/oder physikalischen Größen, wobei der Sensor (1) zumindest zwei separate, auf die jeweilige Aufgabe optimierte Wandlerelemente aufweist.

## Claims

1. Method of measurement for determining or monitoring mechanical and/or physical magnitudes, in which a sensor (1) containing at least one piezoelectric transducer element is provided for the magnitude to be determined or monitored and an electrical sensor signal carried on a single signal path or conductor (2) and influenced by this magnitude is evaluated as the measured signal, characterised in that the sensor is operated through the common single signal path (2), together with an electrical return lead, in both possible modes of operation - on the one hand at low frequencies as a measuring element for a mechanical magnitude making use of the direct piezo effect and on the other hand at higher frequencies as a piezoelectric resonator making use of the inverse piezo effect for electrically exciting mechanical vibrations and of the direct piezo effect for producing the piezoelectric reaction or feedback - and that there is generated from the measured signal present in the signal path a higher frequency signal describing the resonance characteristic and a lower frequency signal, preferably proportional to charge, describing the mechanical effect.

2. Method of measurement according to claim 1, characterised in that there is delivered through the signal path a higher frequency exciting signal for exciting the sensor (1) into mechanical vibrations, on which is superimposed a signal of the same frequency generated as a consequence by the piezoelectric reaction of the sensor and a lower frequency signal generated by the sensor on the basis of mechanical lower frequency effects, the lower frequency portion of the measured signal being virtually short-circuited in the signal path and the resulting short-circuit current being amplified for further signal processing and preferably being integrated to form a charge-proportional output signal.

3. Method of measurement according to claim 2, characterised in that the higher frequency portion of the measured signal in the signal path (2) is decoupled capacitively from the lower frequency portion.

4. Method of measurement according to claim 2, characterised in that the higher frequency exciting signal is applied to the signal path (2) in the form of a voltage and that the total current through the sensor, higher frequency and lower frequency portions, is extracted for further signal processing.

5. Method of measurement according to one of claims 2 to 4, characterised in that for forming the higher frequency signal the difference between a reference signal corresponding in frequency and phase to the exciting signal and free from influence by the sensor (1) and the measured signal is formed, the exciting signal and the reference signal being adjustable in amplitude relative to one another.

6. Method of measurement according to claim 5, characterised in that the amplitude tuning is undertaken in such a way that the real component of the higher frequency signal vanishes.

7. Method of measurement according to one of claims 2 to 6, characterised in that for processing the frequency signal serving for exciting the vibrations the band-pass-filtered higher frequency signal is actively back-coupled in the correct phase, preferably with automatic tuning of the loop gain to equal unity.

8. Measuring arrangement with a sensor (1) containing at least one piezoelectric transducer element and a measuring amplifier connected to it through a single signal path (2), together with an electric return path, characterised in that the sensor (1) is connected through the common single signal path (2) to the inverting input (-) of a charge amplifier arranged in the measuring amplifier for operation in the two possible operating modes - on the one hand at low frequencies as a measuring element for a mechanical magnitude making use of the direct piezo effect and on the other hand at higher frequencies as a piezoelectric resonator making use of the inverse piezo effect for electrically exciting mechanical vibrations and of the direct piezo effect for producing the piezoelectric reaction effect - , that the charge amplifier (5) is furthermore connected to the output of a signal generator (7) and is acted on by the latter with a frequency signal ($u_1$) of which the mean value is equal to the potential of the electric return path and that the output (6) of an operational amplifier arranged in the charge amplifier (5), back coupled through a capacitor (Co) to the inverting input (-), is connected on the one hand to the input of a high-pass filter (9, 14, 14'), at the output of which there is available a signal ($u_{HF}$, $u_F$) dependent on the resonance characteristic, and on the other hand to the input of a low-pass filter (10), at the output of which there is available a low-frequency charge amplifier signal ($u_{NF}$, $u_Q$).

9. Measuring arrangement according to claim 8, characterised in that the frequency signal output (27) of the signal generator (7) is connected to the non-inverting input (+) of the charge amplifier.

10. Measuring arrangement according to claim 9, characterised in that the signal generator (7) includes a further frequency signal output which with reference to the signal ($u_1$) present at the non-inverting input (+) of the charge amplifier (5) - produces a reference signal ($u_2$) equal in frequency and phase and adjustable in amplitude and is connected to the non-inverting input (+) of a reference charge amplifier (11), that the inverting input (-) of an operational amplifier (12) arranged in the reference charge amplifier (11) is connected through a capacitor ($C_2$) to the potential of the return path and is back-coupled to its output (13) through a further capacitor ($C_1$) and that the output of the reference charge amplifier (11) fed through a further high-pass filter (14), like the output of the high-pass filter (9) providing the signal ($u_{HF}$) is connected to a differential amplifier (15) at the output of which there is available a signal ($u_D$) describing the resonance characteristic.

11. Measuring arrangement according to Claim 8, characterised in that the output of the low-pass filter carrying the signal ($u_{NF}$) is connected to the input of a following amplifier (16), at the output of which a processed signal ($u_Q$) is available.

12. Measuring arrangement according to claim 10 or 11, characterised in that the high-pass-filtered output of the difference amplifier (15) is connected to a synchronous demodulator (19) which is in its turn connected to a unit (20) for deriving a phase reference, which in its turn is connected to the signal generator (7), preferably to one of the frequency signal outputs of it, and that the output of the synchronous demodulator (19) is connected to the actual value input (21) of a regulator (22) which has in addition a desired value input (23) and an adjusting magnitude output (24), which latter is connected to a tuning unit for adjusting the relative amplitudes of the two output signals ($u_1$, $u_2$) of the signal generator (7).

13. Measuring arrangement according to claim 12, characterised in that the high-pass-filtered output of the differential amplifier (15) is connected to a further synchronous demodulator (25), that the further synchronous demodulator (25) is connected to a phase reference unit (26) which in its turn is connected to the frequency signal output (27) of the signal generator (7) in the form of a VCO, that the output of the synchronous demodulator (25) is connected to the input of a maximum regulator (29) which is connected to the VCO for tuning the latter, which is preferably also coarsely tunable independently of it.

**14.** Measuring arrangement according to claim 9, characterised in that the signal generator (7) is in the form of a VCO, of which the frequency signal output (27) is also connected to the non-inverting input (+) of an operational amplifier (12) which is arranged in a reference charge amplifier (11) and of which the inverting input (-) is kept through an adjustable capacity ($C_2$) at the potential of the return path and is back-coupled through a further capacity ($C_1$) to its output (13), that the output (13) of the reference charge amplifier (11) as well as the output (6) of the charge amplifier (5) itself is connected to a difference amplifier (15), that the high-pass-filtered output of the difference amplifier (15) is connected to a synchronous demodulator (19), to which is fed the output signal of a phase reference unit (20) likewise connected to the frequency signal output (27) of the VCO (7) and which is connected by its output to the actual value input (21) of a regulator (22), and that the regulator furthermore also having a desired value input (23) includes an adjusting magnitude output (24) which is connected to a frequency-regulating input of the VCO (7).

**15.** Measuring arrangement according to claim 9, characterised in that the signal generator is realised by means of an active back-coupling of the signal ($u_{HF}$) available at the output of the high-pass filter (14) formed as a band-pass to the non-inverting input (+) of the charge amplifier (5) as well as to the non-inverting input (+) of a reference charge amplifier (11), that the output (13) of the reference charge amplifier (11) as well as the output (6) of the charge amplifier (5) is connected to a difference amplifier (15), of which the output is fed to the band-pass (14) and to the low-pass filter (10), and that a 90° phase-shifting member (32) and preferably an automatic gain control unit (AGC) (33) are inserted in the active back coupling.

**16.** Measuring arrangement according to claim 8, characterised in that the frequency signal output (27) of the signal generator (7) is connected through an emitter follower (34) to the signal path (2) of the sensor (1), that a respective constant current source (36) is inserted in the emitter lead and in the collector lead of the emitter follower transistor (15) and that the collector (37) of the emitter follower transistor (35) is connected to the inverting input (-) of the charge amplifier (5).

**17.** Measuring arrangement according to claim 8, characterised in that the frequency signal output ($u_1$) of the signal generator (7) is present at the non-inverting input (+) of an operational amplifier (40) of which the output (41) is connected to the gate of an FET (42), which in its turn is fed back through its source to the inverting input (-) of the operational amplifier (40) and is connected to the constant current source (36) as well as to the signal path (2) of the sensor (1), and that the inverting input (-) of the charge amplifier (5) is connected to the drain of the FET (42) and to a further constant current source (36).

**18.** Measuring arrangement according to claim 17, characterised in that the signal generator (7) has a further frequency signal output ($u_2$) which is connected to the non-inverting input (+) of a reference operational amplifier (43), of which the output (44) is connected to the gate of a further FET (45) which in its turn is back-coupled through its source to the inverting input (-) of the reference operational amplifier (43) and is connected to a constant current source (36) as well as to a capacitor ($C_2$) which has its other side at the potential of the return path, that the inverting input (-) of a reference charge amplifier (11) is connected to the drain of the further FET (45) and to a further constant current source (36), and that furthermore the outputs (6, 13) of the charge amplifier (5) on the one hand and the reference charge amplifier (11) on the other hand are fed to a difference voltage amplifier (15), of which the output is present at the input of the high-pass and low-pass filters (14, 10).

**19.** Measuring arrangement according to claim 8, characterised in that the frequency signal output ($u_1$) of the signal generator (7) is present at the non-inverting input (+) of an operational amplifier (49), of which the output is connected to the gate of an FET (46), which in its turn is back-coupled through its source to the inverting input (-) of the operational amplifier (49) and is connected to a constant current source (36) as well as to the signal path (2) of the sensor (1), that the signal generator (7) has a further frequency signal output ($u_2$) which is present at the non-inverting input (+) of a reference operational amplifier (50) of which the output is connected to the gate of a further FET (47), which in its turn is back-coupled through its source to the inverting input (-) of the reference operational amplifier (50) and is connected to a further constant current source (36) as well as to a capacitor ($C_2$) which has its other side lying at the potential of the electric return path, and that the drain terminals of the two FETs (46, 47) are fed to a difference current amplifier (48) of which the current output (49) is connected to the inverting input (-) of the charge amplifier (5) which has its non-inverting input (+) at the potential of the electric return path.

**20.** Measuring arrangement according to claim 8, characterised in that the signal generator is realised by means of an active back-coupling of the signal ($u_F$) available at the output of the high-pass filter in the form of a band-bass (14) to the non-inverting input (+) of an operational amplifier (49) as well as to the non-inverting input (+) of a reference operational amplifier (50), that the output of these two operational amplifiers (49, 50) is present respectively at the gate of an FET (46, 47), of which the source is connected to a respective separate constant current source (36) and is back-coupled to the inverting input (-) of the respective operational amplifier (49, 50), and in the case of the operational amplifier (14) the signal path (2) of the sensor (1) is connected in addition to the source uhilst in the case of the reference operational amplifier (50) there is an additional connection from the source through an adjustable capacity ($C_2$) to the potential of the electric return path, that the drain terminals of the two FETs (46, 47) are fed to a difference current amplifier and i/V converter (48'), of which the output is connected on the one hand to a band-pass filter (14), and on the other hand through a resistor ($R_o$) to the inverting input (-) of the charge amplifier (5), an automatic gain control unit (AGC) (33) being preferably inserted in the feedback path between the band-pass (14) and the non-inverting inputs (+) of the two operational amplifiers (49, 50).

**21.** Measuring arrangement according to claim 20, characterised in that a driver stage (51) producing frequency signals ($u_1$, $u_2$) of opposite phase for the two operational amplifiers (49, 50) is inserted between the automatic gain control unit (AGC) (33) and the non-inverting inputs (+) of the two operational amplifiers (49, 50) and that instead of the difference current amplifier a current-adding circuit (52) is provided.

**22.** Measuring arrangement according to claim 21, characterised in that the driver stage (51') has an additional unit for adjusting the amplitudes of the two oppositely phased frequency signal ($u_1$, $u_2$), that the high-pass-filtered output of the charge amplifier (5) is connected to a synchronous demodulator (19) which is further connected to a unit (20) for producing a phase reference, which in its turn is connected to one of the non-inverting inputs (+) of the two operational amplifiers (49, 50), and that the output of the synchronous demodulator (19) is connected to the actual value input (21) of a regulator (22) which has in addition a desired value input (23) and an adjusting magnitude output (24), the latter being connected to the unit for tuning the amplitude.

**23.** The use of a measuring arrangement according to one of claims 8 to 22, for determining or monitoring mechanical and/or physical magnitudes through the lower frequency portion of the measured signal in the signal path (2) with simultaneous monitoring of the functioning of the sensor (1) through the resonance behaviour characterised by the higher frequency portion of the measured signal, the sensor (1) having a single transducer element which contains as least one piezo element.

**24.** The use of a measuring arrangement according to one of claims 8 to 22, for the simultaneous determination or monitoring of at least two different mechanical and/or physical magnitudes, the sensor (1) having at least two separate transducer elements optimised for the respective functions.

**Revendications**

**1.** Procédé de mesure pour la détermination ou la surveillance de grandeurs mécanique et/ou physique, dans lequel un capteur (1) comportant au moins un élément transducteur piézoélectrique est soumis à la grandeur à déterminer ou à surveiller, et un signal électrique influencé par cette grandeur, venant du capteur (1) est évalué en tant que signal de mesure, caractérisé en ce que l'on fait fonctionner le capteur, via la ligne de signal (2) unique et commune qui inclut une rétroaction électrique, selon deux modes possibles de fonctionnement, d'une part, à des basses fréquences, comme élément de mesure d'une valeur mécanique en exploitant l'effet piézoélectrique direct et, d'autre part, à des fréquences plus élevées, comme résonateur piézoélectrique en exploitant l'effet piézoélectrique inverse pour la stimulation électrique d'oscillations mécaniques ainsi que l'effet piézoélectrique direct pour la génération de la rétroaction piézoélectrique, et en ce que l'on génère, à partir du signal de mesure sur la ligne de signal, un signal de fréquence plus élevé qui décrit la caractéristique de résonnance et un signal de fréquence plus élevé qui, de préférence, est proportionnel à la charge, qui décrit l'effet mécanique.

**2.** Procédé de mesure selon la revendication 1, caractérisé en ce que l'on fournit, sur la ligne de signal, un signal de stimulation à une fréquence relativement élevée pour stimuler des oscillations mécaniques dans le capteur (1) sur lequel sont superposés un signal de la même fréquence généré par la suite par l'effet piézoélectrique rétroactif du capteur, ainsi qu'un signal de basse fréquencé généré suite à des effets mécaniques à des basses fréquences, dans lequel le composant à basse fréquence du signal de mesure subit une mise en court-circuit virtuelle sur la ligne de signal et le courant de court-circuit qui en résulte est amplifié pour le traitement ultérieur du signal et, de préférence, est intégré dans un signal de sortie qui est proportionnel à la charge.

3. Procédé de mesure selon la revendication 2, caractérisé en ce que le composant à fréquence relativement élevée du signal de mesure est découplé capacitivement du composant de basse fréquence sur la ligne de signal (2).

4. Procédé de mesure selon la revendication 2, caractérisé en ce que le signal de stimulation à fréquence relativement élevée est appliqué, en tension, à la ligne de signal (2) et en ce que le courant total à travers le capteur, les composants à fréquence relativement élevée et à basse fréquence, est exploité pour le traitement ultérieur du signal.

5. Procédé de mesure selon l'une des revendications 2 à 4, caractérisé en ce que afin de constituer le signal à fréquence plus élevée, on constitue la différence entre un signal de référence qui correspond, quant à sa fréquence et à sa phase, au signal de stimulation et qui ne subit pas d'influence du capteur (1), et le signal de mesure, et dans lequel il est possible de réaliser un accord relatif entre le signal de stimulation et le signal de référence quant à leurs amplitudes.

6. Procédé de mesure selon la revendication 5, caractérisé en ce que l'on réalise la détermination d'amplitude d'une telle manière que la partie réelle du signal à fréquence plus élevée disparaisse.

7. Procédé de mesure selon l'une des revendications 2 à 6, caractérisé en ce que, dans le but de préparer le signal fréquentiel utilisé pour stimuler les oscillations, on réalise un rebouclage actif en retour et à la bonne phase du signal à fréquence plus élevée après filtrage passe-bande, utilisant de préférence un réglage automatique de l'amplification de boucle sur un facteur 1.

8. Agencement de mesure, comprenant un capteur (1) comportant au moins un élément transducteur piézoélectrique et un amplificateur de mesure relié audit capteur grâce à une seule ligne de signal (2) qui inclut la rétroaction électrique, caractérisé en ce que le capteur (1), pour son fonctionnement selon les deux modes de fonctionnement possibles, est relié, d'une part à des basses fréquences en tant qu'éléments de mesure pour une grande mécanique en exploitant l'effet piézoélectrique direct et, d'autre part, à des fréquences plus élevées en tant que résonateur piézoélectrique en exploitant l'effet piézoélectrique inverse pour la stimulation électrique d'oscillations mécaniques et l'exploitation de l'effet piézoélectrique direct pour la génération de l'effet rétroactif piézoélectrique, via la ligne de signal (2) commune et unique, à l'entrée inverse (-) d'un amplificateur de charge (5) agencé dans l'amplificateur de mesure, en ce que l'amplificateur de charge (5) est, en outre, raccordé à la sortie d'un générateur de signal (7) pour être piloté par ce dernier avec un signal fréquentiel ($u_1$) dont la valeur moyenne est égale à la tension de la rétroaction électrique, et en ce que la sortie (6) d'un amplificateur opérationnel associé à l'amplificateur de charge (5) et qui est rebouclé sur l'entrée inverseuse (-) dudit amplificateur opérationnel via un condensateur (Co) est relié, d'une part à l'entrée d'un filtre passe-haut (9, 14, 14') permettant d'obtenir à sa sortie un signal ($u_{HF}$, $u_F$) qui est dépendant de la caractéristique de résonnance et qui est relié, d'autre part, à l'entrée d'un filtre passe-bas (10) permettant d'obtenir à sa sortie un signal d'amplificateur de charge ($u_{NF}$, $u_Q$) de basse fréquence.

9. Agencement de mesure selon la revendication 8, caractérisé en ce que la sortie du signal fréquentiel (27) du générateur de signal (7) est reliée à une entrée non-inverseuse (+) de l'amplificateur de charge.

10. Agencement de mesure selon la revendication 9, caractérisé en ce que le générateur de signal (7) comporte une sortie supplémentaire d'un signal fréquentiel qui - par rapport au signal ($u_1$) présent sur l'entrée non-inverseuse (+) de l'amplificateur de charge (5), porte un signal de référence ($u_2$) de la même fréquence et de la même phase, et dont l'amplitude peut être accordée, et qui est relié à l'entrée non-inverseuse (+) de l'amplificateur de charge de référence (11), en ce que l'entrée inverseuse (-) d'un amplificateur opérationnel (12) intégré dans l'amplificateur de charge de référence (11), est raccordé, via une capacité ($C_2$) à la tension de la rétroaction et, via une capacité supplémentaire ($C_1$) à sa propre sortie (13), et en ce que, d'une part, via un filtre passe-haut supplémentaire (14), la sortie de l'amplificateur de charge de référence (11) et, d'autre part, la sortie d'un filtre passe-haut (9) portant ledit signal ($u_{HF}$) dépendant d'une caractéristique de résonnance, sont raccordées à un amplificateur différentiel (15) à la sortie duquel un signal ($u_D$) descriptif de la caractéristique de résonnance peut être saisi.

11. Agencement de mesure selon la revendication 8, caractérisé en ce que la sortie du filtre passe-bas (10) portant ledit signal ($u_{NF}$) est relié à l'entrée d'un amplificateur ultérieur (16) sur la sortie duquel un signal préparé ($u_Q$) est disponible.

12. Agencement de mesure selon la revendication 10 ou 11, caractérisé en ce que la sortie, après passage dans le filtre passe-haut, de l'amplificateur différentiel (15) est raccordée à un démodulateur synchrone (19) qui est également raccordé à une unité (20) de génération de référence de phase qui, à son tour, est reliée à un générateur de signal (7) de préférence avec une des sorties de signal fréquentiel de ce dernier, et en ce que la sortie du démodulateur synchrone (19) est reliée à l'entrée de valeur réelle (21) d'un régulateur (22) comportant également une entrée pour une valeur de consigne (23) et une sortie (24) pour une valeur de réglage, cette dernière étant reliée à une unité d'accord pour mettre en accord l'une par rapport à l'autre les amplitudes relatives des deux signaux de sortie ($u_2$, $u_2$) du générateur de signal (7).

13. Agencement de mesure selon la revendication 12, caractérisé en ce que la sortie, après passage par le filtre passe-haut, de l'amplificateur différentiel (15), est reliée à un modulateur synchrone supplémentaire (25), en ce que le modulateur synchrone supplémentaire (25) est raccordé à une unité de référence de phase (26) qui, à son tour, est raccordée à la sortie de signal fréquentiel (27) du générateur de signal (7) réalisé en forme d'oscillateur commandé en tension (VCO), en ce que la sortie du démodulateur synchrone (25) est raccordée à l'entrée d'une unité de réglage de maximum (29) qui, pour des fins de réglage de l'oscillateur VCO, est raccordée à celui-ci dont le réglage grossier est réalisable de préférence indépendamment.

14. Agencement de mesure selon la revendication 9, caractérisé en ce que le générateur de signal (7) est réalisé en forme de VCO dont la sortie de signal fréquentiel (27) est reliée à l'entrée non-inverseuse (+) d'un amplificateur opérationnel (12) faisant partie de l'amplificateur de charge de référence (11), et dont l'entrée inverseuse (-) se trouve, via une capacité réglable ($C_2$), à la tension de la rétroaction et qui est bouclée vers l'arrière, à sa sortie (13), via une capacité supplémentaire ($C_1$), en ce que la sortie (13) de l'amplificateur de charge de référence (11) ainsi que la sortie (6) de l'amplificateur de charge (5) lui-même est raccordée à un amplificateur différentiel (15), en ce que la sortie après passage par le filtre passe-haut de l'amplificateur différentiel (15) est reliée à un démodulateur synchrone (19) qui reçoit également le signal de sortie d'une unité de référence de phase (1) qui est également raccordée à la sortie de signal fréquentiel (27) de l'oscillateur VCO (7) et dont la sortie est reliée à l'entrée (21) de valeur effective d'un dispositif de réglage (22), et en ce que le dispositif de réglage, qui comporte également une entrée de valeur de consigne (23), comporte une sortie pour une grandeur de réglage (24) qui est reliée à une entrée de réglage en fréquence du VCO (7).

15. Agencement de mesure selon la revendication 9, caractérisé en ce que le générateur de signal est réalisé grâce à un couplage par rétroaction du signal ($u_{HF}$) disponible à la sortie du filtre passe-haut (14) réalisé en forme de filtre passe-bande, sur l'entrée non-inverseuse (+) de l'amplificateur de charge (5) ainsi que l'entrée non-inverseuse (+) d'un amplificateur de charge de référence (11), en ce que la sortie (13) de l'amplificateur de charge de référence (11) ainsi que la sortie (6) de l'amplificateur de charge (5) sont raccordées à un amplificateur différentiel (15) dont la sortie est reliée au filtre passe-bande (14) et au filtre passe-bas (10), et en ce qu'un élément (32) réalisant une rotation de 90° de la phase et, de préférence, une unité de commande de gain automatique (AGC) (33) sont raccordés dans le circuit de couplage actif par rétroaction.

16. Agencement de mesure selon la revendication 8, caractérisé en ce que la sortie du signal fréquentiel (27) du générateur de signal (7) est reliée, via un circuit à émetteur suiveur (34) à la ligne de signal (2) du capteur (1), en ce qu'une source de courant (33, 36) est branchée dans la ligne d'émetteur et dans la ligne de collecteur du transistor à émetteur suiveur (35), et en ce que le collecteur (37) du transistor à émetteur suiveur (35) est relié à l'entrée inverseuse (-) de l'amplificateur de charge (5).

17. Agencement de mesure selon la revendication 8, caractérisé en ce que la sortie du signal fréquentiel ($u_1$) du générateur de signal (7) est présente sur l'entrée non-inverseuse (+) de l'amplificateur opérationnel (40) dont la sortie (41) est reliée à la grille d'un transistor à effet de champ (FET) (42) qui, pour sa part, est rebouclé, via sa source, sur l'entrée inverseuse (-) de l'amplificateur opérationnel (4) et est relié à une source de courant constant (36) ainsi qu'à la ligne de signal (2) du capteur (1), et en ce que l'entrée inverseuse (-) de l'amplificateur de charge (5) est reliée au drain du FET (42) ainsi qu'à une source supplémentaire de courant constant (36).

18. Agencement de mesure selon la revendication 17, caractérisé en ce que le générateur de signal (7) comporte une sortie supplémentaire de signal fréquentiel ($u_2$) qui est raccordée à l'entrée non-inverseuse (+) d'un amplificateur opérationnel de référence (43), dont la sortie (44) est reliée à la grille d'un autre FET (45) dont la source est, d'une part, couplée par rétroaction à l'entrée inverseuse (-) de l'amplificateur opérationnel de référence (43) et, d'autre part, raccordé à une source de courant constant (36) ainsi qu'à un condensateur ($C_2$) dont l'autre borne se trouve à la tension de la rétroaction, en ce que l'entrée inverseuse (-) d'un amplificateur de charge de référence (11) est reliée au drain du FET supplémentaire (45) ainsi qu'à une source supplémentaire d'un courant constant (36), et en ce que les sorties (6, 13) de l'amplificateur de charge (5) d'une part, et de l'amplificateur de charge de référence (11) d'autre part, sont appliquées à un amplificateur de différence de tension (15) dont la sortie est reliée à l'entrée du filtre passe-haut et du filtre passe-bas (14, 10).

19. Agencement de mesure selon la revendication 8, caractérisé en ce que la sortie du signal fréquentiel ($u_1$) du générateur de signal (7) est appliquée à l'entrée non-inverseuse (+) de l'amplificateur opérationnel (49) dont la sortie est reliée à la grille d'un FET (46), dont la source est, d'une part, couplée par rétroaction à l'entrée inverseuse (-) de l'amplificateur opérationnel (49) et, d'autre part, relié à une source de courant constant (36) ainsi qu'à la ligne de signal (2) du capteur (1), en ce que le générateur de signal (7) comporte une source supplémentaire de signal fréquentiel ($u_2$) qui est appliquée à l'entrée non-inverseuse (+) d'un amplificateur opérationnel de référence (50) dont la sortie est reliée à la grille d'un autre FET (47) dont la source est, d'une part, couplée par rétroaction à l'entrée inverseuse (-) de l'amplificateur opérationnel de référence (50) et, d'autre part, raccordée à une autre source de courant constant (36) ainsi qu'à un condensateur ($C_2$) dont l'autre borne se trouve à la tension de la rétroaction électrique, et en ce que les bornes de drain des deux FET (46, 47) sont raccordées à un amplificateur de différence de courant (48) dont la sortie de courant (49) est appliquée à l'entrée inverseuse (-) d'un amplificateur de charge dont l'entrée non-inverseuse (+) se trouve à la tension de la rétroaction électrique.

20. Agencement de mesure selon la revendication 8, caractérisé en ce que le générateur de signal est réalisé grâce à un couplage actif de rétroaction du signal ($u_F$) disponible à la sortie du filtre passe-haut réalisé en forme de filtre passe-bande (14), sur l'entrée non-inverseuse (+) d'un amplificateur opérationnel (49) ainsi que sur l'entrée non-inverseuse (+) de l'amplificateur opérationnel de référence (50), en ce que les sorties de ces deux amplificateurs opérationnels (49, 50) sont appliquées respectivement à la grille d'un FET (46, 47) dont les sources sont reliées respectivement à une source séparée de courant constant (36), par rétroaction, à l'entrée inverseuse (-) de l'amplificateur opérationnel (49, 50) respectif, et dans lequel, dans le cas de l'amplificateur opérationnel (49), la ligne de signal (2) du capteur (1) est également reliée à la source et, dans le cas de l'amplificateur opérationnel de référence (50), une liaison supplémentaire est prévue depuis la source vers la tension de la rétroaction électrique via une capacité ajustable ($C_2$), en ce que les bornes de drain des deux FET (46, 47) sont appliquées à un amplificateur de différence de courant et convertisseur i/u (48') dont la sortie est raccordée, d'une part, à un filtre passe-bande (14) et, d'autre part, via une résistance ($R_o$) à l'entrée inverseuse (-) de l'amplificateur de charge (5) et dans lequel, de préférence, une unité de commande de gain automatique (AGC) (33) est branchée dans la ligne de rétroaction entre le filtre passe-bande (14) et les entrées non-inverseuses (+) des deux amplificateurs opérationnels (49, 50).

21. Agencement de mesure selon la revendication 20, caractérisé en ce que entre l'unité de commande de gain automatique (AGC) (33) et les entrées non-inverseuses (+) des deux amplificateurs opérationnels (49, 50), un étage d'attaque (51) susceptible de générer des signaux fréquentiels ($u_1$, $u_2$) de phase opposée pour les deux amplificateurs opérationnels (49, 50), et en ce que, au lieu de l'amplificateur de différence de courant, on utilise un circuit d'addition de courant (52).

22. Agencement de mesure selon la revendication 21, caractérisé en ce que l'étage d'attaque (51') comporte une unité supplémentaire pour l'accord de l'amplitude des deux signaux fréquentiels ($u_1$, $u_2$) de phase opposée, en ce que la sortie après filtrage passe-haut de l'amplificateur de charge (5) est relié à un démodulateur synchrone (19) qui, en outre, est raccordé à une unité (20) pour la génération d'une référence de phase, qui, pour sa part, est reliée à l'une des entrées non-inverseuses (+) des deux amplificateurs opérationnels (49, 50), et en ce que la sortie du démodulateur synchrone (19) est reliée à l'entrée de valeur effective (21) d'un dispositif de régulation (22) qui comporte également une entrée de grandeur de consigne (23) et une sortie de valeur de réglage (24) cette dernière étant reliée à l'unité d'accord d'amplitude.

23. Utilisation d'un agencement de mesure selon l'une des revendications 8 à 22 pour la détermination ou la surveillance de valeurs mécanique et/ou physique via la partie de basse fréquence du signal de mesure sur la ligne de mesure (2) avec surveillance simultanée du fonctionnement du capteur (1) grâce à un comportement de résonnance caractérisé par la partie de fréquence plus élevée du signal de mesure, dans lequel le capteur (1) comprend un seul élément transducteur qui comporte au moins un élément piézoélectrique.

24. Utilisation d'un agencement de mesure selon l'une des revendications 8 à 22 pour la détermination ou la surveillance simultanées d'au moins deux différentes grandeurs mécanique et/ou physique, dans lequel le capteur (1) comprend au moins deux éléments transducteurs séparés, chaque élément étant optimisé pour la tache qui lui est propre.

EP 0 423 273 B1

$C_K$

*2*

*1*

*4*

*3*

$L_K$

_Fig. 1_

*2*

$C_r$

*3*

*1*

*5*

*6*

_Fig. 2_

*7*

*8*

*4*

$C_0$

*2*

*1*

_Fig. 3_

*7*

$u_1$

*5*

*6*

$u_A$

*9*

$u_{HF}$

*10*

$u_{NF}$

$C_0$

*2*

*1*

$C + jD$

_Fig. 4_ ∨

24

_Fig. 5_

_Fig. 6_

# Fig. 7

## _Fig. 8_

## _Fig. 9_

_Fig. 10_

_Fig. 11_

$$i_\bullet = u_\bullet/R_S$$

_Fig. 12_

# Fig. 13

# Fig. 14

_Fig. 15_

_Fig. 17_

_Fig. 18_

_Fig. 19_

# *Fig. 16*